# EUROPEAN PATENT APPLICATION

(11) **EP 3 079 072 A1**
(43) Date of publication of application: **12.10.2016**
(21) Application number: 15163079.5
(22) Date of filing: 10.04.2015
(51) Int. Cl.: G06F 15/173

(54) **A PARALLEL MACHINE WITH REDUCED NUMBER OF CONNECTIONS BETWEEN LOGICAL CIRCUITS**

(71) Applicant: Politechnika Lodzka, 90-924 Lodz (PL)
(72) Inventor: Jung, Jaroslaw, 94-054 Lodz (PL); Polanowski, Piotr, 93-378 Lodz (PL); Kielbik, Rafal, 95-070 Aleksandrow Lodzki (PL); Halagan, Krzysztof, 90-425 Lodz (PL); Zatorski, Witold, 93-249 Lodz (PL); Ulanski, Jacek, 95-006 Brojce (PL); Napieralski, Andrzej, 95-070 Aleksandrow Lodzki (PL); PAKULA, Tadeusz, deceased (PL)
(74) Representative: Eupatent.pl

(57) **Abstract**

A parallel machine comprising operational cells forming nodes of a face centered (FCC) lattice, characterized in that it comprises: a series of panels (P1'-P3') with electronic logical circuits (1,1 - 3,3); wherein each logical circuit is configured to emulate a plurality of operational cells (OC) and the logical circuits (1,1 - 3,3) are physically connected with each other by input/output lines (_{IN}LIN/_{OU}LIN) such that they form nodes of a square lattice; wherein the FCC lattice comprises circuits arranged such that each circuit having index (*i,j,k*) is communicatively connected with 18 neighboring circuits, wherein indices (*i,j*) indicate location of a circuit on a panel and (*k*) indicates a panel; wherein the circuit having index (*i,j,k*) is connected directly only with circuits having indices (*i-*1*,j,k*); (*i,j*+1*,k*); (*i*+1*,j,k*); (*i,j*-1*,k*); (*i,j,k*-1) and (*i,j,k*+1) (directly-connected circuits); and wherein the circuit having index (*i,j,k*) is configured to communicate with circuits having indices (*i*-1*,j*-1*,k*), (*i*-1*,j*+1*,k*), (*i*+1*,j*+1*,k*); (*i*+1*,j-*1,*k*); (*i*-1*,j,k-1*); (*i,j*+1*,k-1*); (*i*+1*,j,k-1*); (*i,j*-1*,k-1*); (*i*-1*,j,k+1*); (*i,j*+1*,k*+*1*); (*i*+1*,j,k*+*1*) and (*i -* ,*j*-1,*k*+*1*) (indirectly-connected circuits) via the directly-connected circuits.

## Description

### TECHNICAL FIELD

The present invention relates to a parallel machine with reduced number of connections between logical circuits.

### BACKGROUND

Machines configured to perform simultaneous logical operations or mathematical calculations, such as supercomputers or dedicated simulators of processes taking place in multi-element physical systems, are called parallel machines. They use of a large number of microprocessors or other logic circuits, which, located at nodes of a spatial lattice, execute simultaneously a plurality of logical operations. Some of these devices are used to model phenomena of real objects which do not have a granular structure. The precision of simulation depends on the precision of the model. The operational circuits located in the nodes of a spatial lattice communicate with each other to exchange information.

The amount of exchanged information, as well as the quality of representation of physical space, depends on a so-called lattice coordination number. This is a number of the nearest neighboring nodes, with which one node may directly connect.

There are known systems, in which operational cells are located in a cubic lattice, for which the coordination number is 6. There are also known more elaborate systems, such as a Face Centered Cubic (FCC), having the coordination number 12.

It is possible to design logical circuits that may comprise elements corresponding to a plurality of operational cells at lattice nodes and a plurality of such logical circuits can be connected in a single device. The number of such circuits depends on the size of the lattice, namely the number of nodes, and the number of connections between the circuits depends on the coordination number of the lattice.

Design of a device for implementing a lattice with a large number of nodes and a high coordination number, requires consideration of the manner in which electronic circuits may be arranged physically, how to connect them, how to provide cooling of such device, etc.

It seems obvious to arrange the electronic circuits according to the primary architecture of the lattice. Such an arrangement is however not optimal, because the access to the circuits located in the center of the device would be very difficult and it would be difficult to cool and service such a device.

Therefore, there is a need to design an optimized architecture for a device comprising a plurality of logical circuits, which would allow for implementation of operational cells at nodes of a face centered lattice having a coordination number 12.

### SUMMARY

There is disclosed a parallel machine comprising operational cells forming nodes of a face centered (FCC) lattice. The machine comprises: a series of panels with electronic logical circuits. Each logical circuit is configured to emulate a plurality of operational cells and the logical circuits are physically connected with each other by input/output lines such that they form nodes of a square lattice. The FCC lattice comprises circuits arranged such that each circuit having index (*i,j,k*) is communicatively connected with 18 neighboring circuits, wherein indices (*i,j*) indicate location of a circuit on a panel and (k) indicates a panel. The circuit having index *(i,j,k)* is connected directly only with circuits having indices (*i*-1*,j,k*); (*i,j*+1*,k*); (*i*+1*,j,k*); (*i,j*-1*,k*); (*i,j,k-*1) and (*i,j,k*+1) (directly-connected circuits). The circuit having index *(i,j,k)* is configured to communicate with circuits having indices (*i*-1*,j*-1*,k*)*,* (*i-*1*,j*+1*,k*)*,* (*i*+1*,j*+1*,k*); (*i*+1,*j*-1*,k*); (*i*-1*,j,k-1);* (*i,j*+1*,k-1*); (*i*+1,*j,k-1*); (*i,j*-1*,k*-1); (*i*-1*,j,k*+1); (*i,j*+1*,k*+*1*); (*i*+1*,j,k*+*1)* and (*i,j*-1*,k*+*1*) (indirectly-connected circuits) via the directly-connected circuits.

Preferably, the data to indirectly-connected circuits is transmitted in two stages, wherein in the first stage data is sent to the directly connected circuits and in the second stage data is sent to the further directly connected circuits.

Preferably, each logical circuit comprises shift registers; wherein the input and output lines are connected to serial outputs and inputs of output shift registers; wherein parallel inputs of a first group of shift registers is connected with output communication lines and with signal lines and parallel inputs of a second group of shift registers is connected with output communication lines; wherein parallel outputs of the first group of shift registers is connected with input communication lines and parallel outputs of the second group of shift registers is connected with signal lines and input communication lines; wherein the serial outputs of the first group of shift registers is connected, in succession, by output lines, input lines and input shift registers belonging to logical circuits being adjacent nodes in the plane of panel of the square lattice, whereas the serial outputs of the second group of shift registers is connected, in succession, by output lines, input lines and input shift registers belonging to logical circuits being adjacent nodes in the plane of neighboring panels.

Preferably, the output lines are connected to serial outputs of output shift registers and input lines are connected to serial inputs of input shift registers; whereas parallel inputs of the output shift registers are connected with directional channels and parallel outputs of the input shift registers are connected with directional channels; wherein the directional channels and comprise directional lines; and each logical circuit comprises latch registers connected with directional channels; wherein a first group of latch registers is connected directly with the input and output directional channels, the inputs of a second group of latch registers are connected with the communication lines and outputs of the third group of latch registers are connected with communication lines, wherein the outputs of the first group of latch registers and the second group of latch registers are connected sequentially by means of: directional channels, input shift registers, input/output lines, input shift registers and directional channels with the inputs of the first group of latch registers and the third group of latch registers belonging to logical circuits forming neighboring nodes of the square lattice.

Preferably, the panels have their main planes positioned vertically.

The electronic logical circuits can be microprocessors or PLD circuits, preferably FPGAs, or ASICs.

### BRIEF DESCRIPTION OF FIGURES

The object of the invention is shown by means of example embodiments on a drawing, in which:
Fig. 1 presents spatial arrangement of nodes in a face centered lattice having the coordination number 12.
Fig. 2 presents a section of the FCC lattice.
Fig. 3 presents a structure of a reduced cubic lattice RCL.
Fig. 4 presents a difference between a regular plane and a rotated plane;
Fig. 5 presents a logical circuit.
Fig. 6 presents an example of interconnection arrangement and a layout of operational cells positioned at 157 nodes, of an FCC lattice in 9 logical circuits.
Fig. 7A, 7B present a configuration of a basic circuit and a supplementary circuit, respectively.
Fig. 8A, 8B present directions of directional channels for a basic circuit and a supplementary circuit, respectively.
Fig. 9 presents a table of pairs of complementary circuits.
Fig. 10 presents an example of arrangement of 3 sections of planes.
Fig. 11A, 11B present different logical circuits, each comprising 18 operational cells.
Fig. 12 presents an example of arrangement of logic circuits on a plane square lattice and examples lines responsible for exchange of information between operational cells.
Fig. 13A, 13B show, respectively, clockwise and counter-clockwise method of data exchange between neighboring logical circuits which are located on the same plane.
Fig. 14A shows an edge data exchange method between neighboring logical circuits located on different panels.
Fig. 14B shows a central data exchange method between neighboring logical circuits located on different panels.

**Figs. 15-20** **show a first example** of a structure of a three-dimensional parallel machine comprising logical circuits with latch registers and shift registers, wherein a counter-clockwise-edge data exchange system has been used, and wherein:

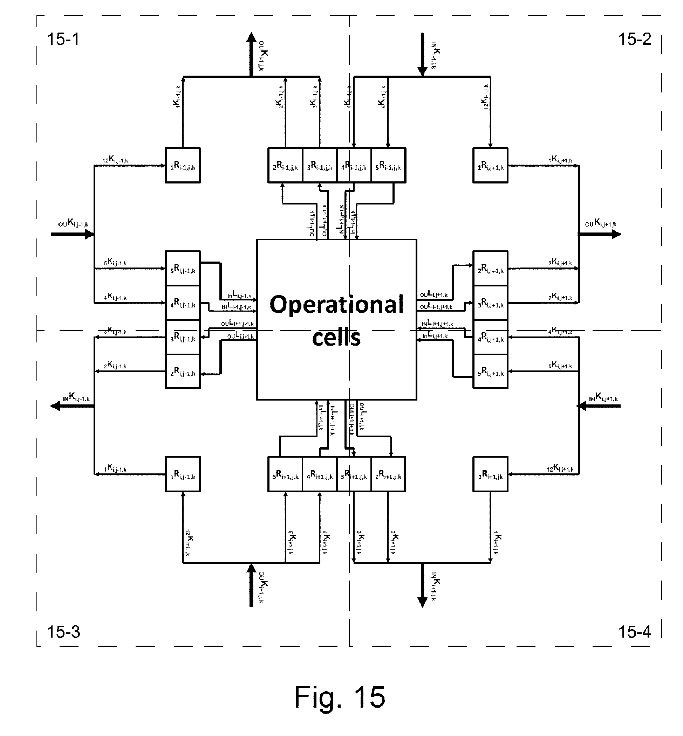

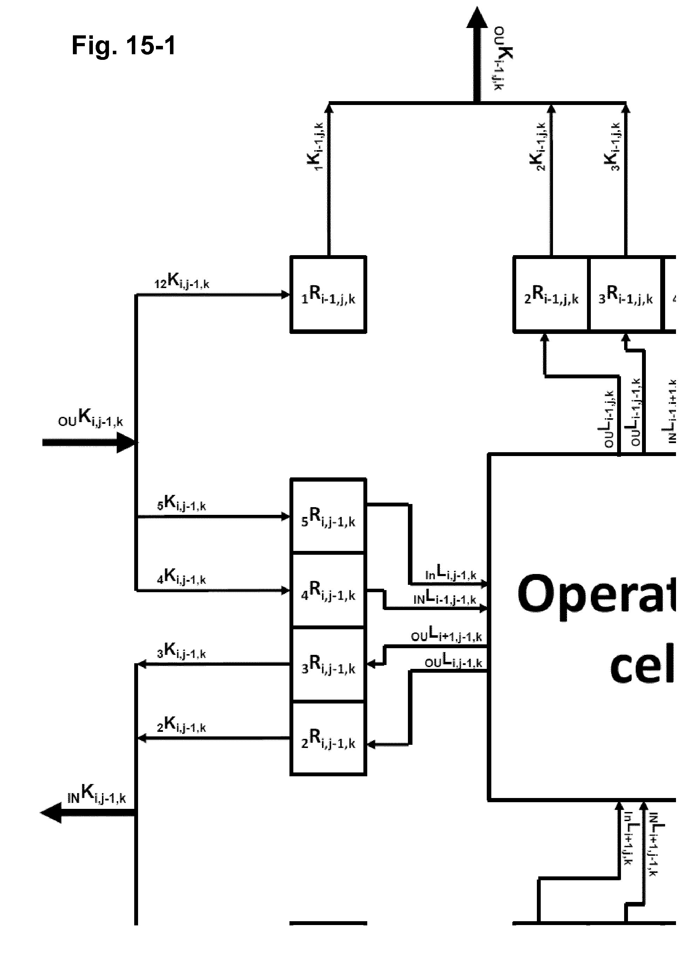

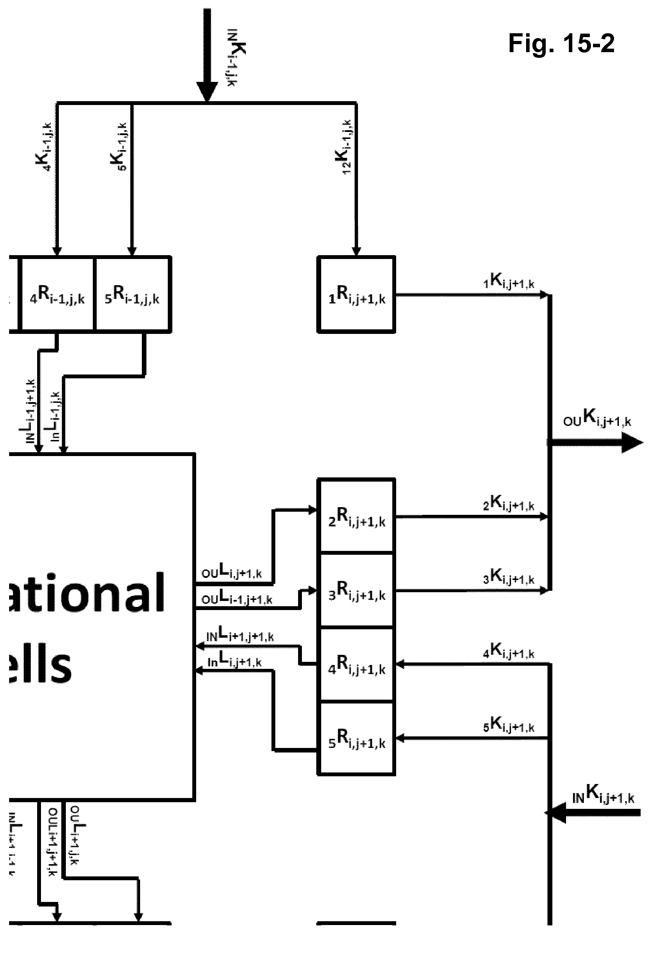

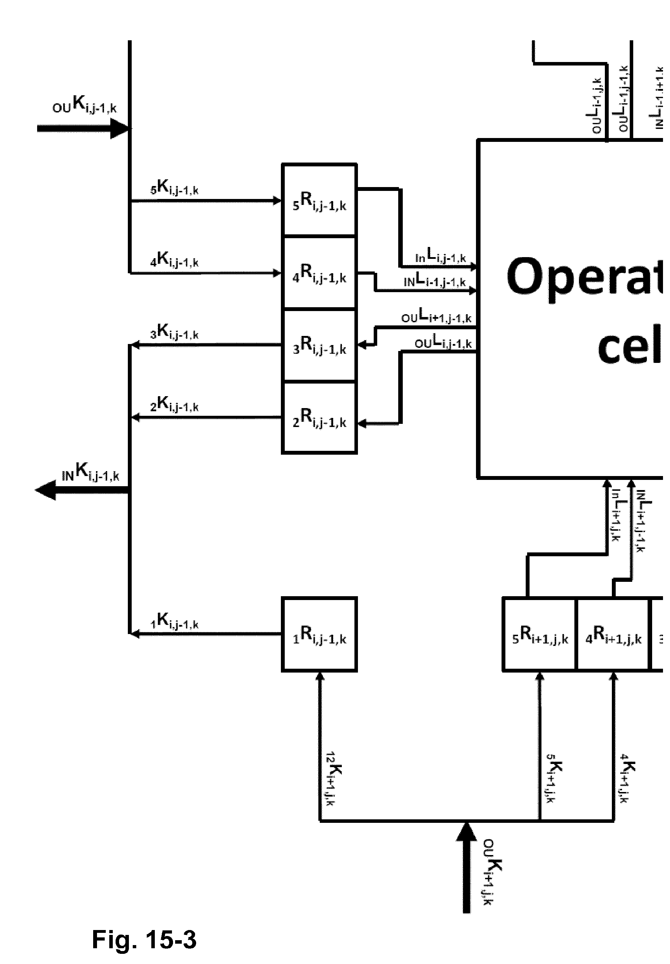

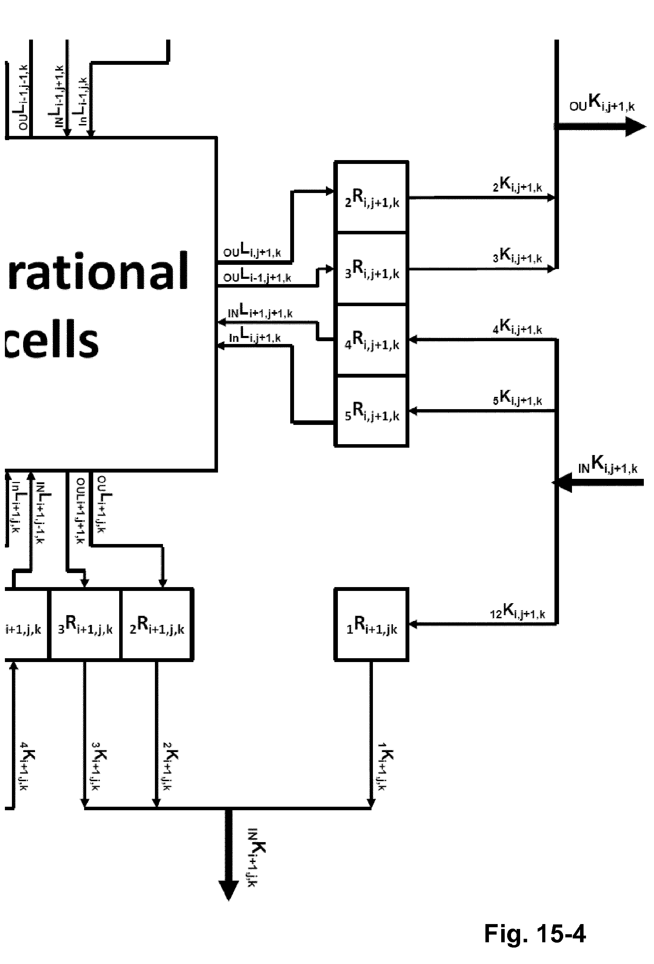

Fig. 15 shows a fragment of a logical circuits with designated areas of operational cells and registers R responsible for exchanging information between operational cells belonging to the same panel.

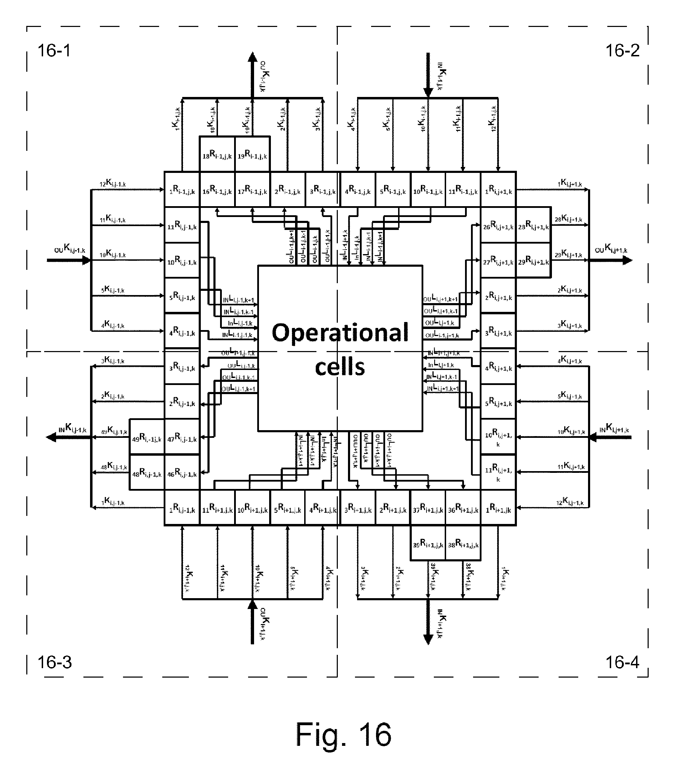

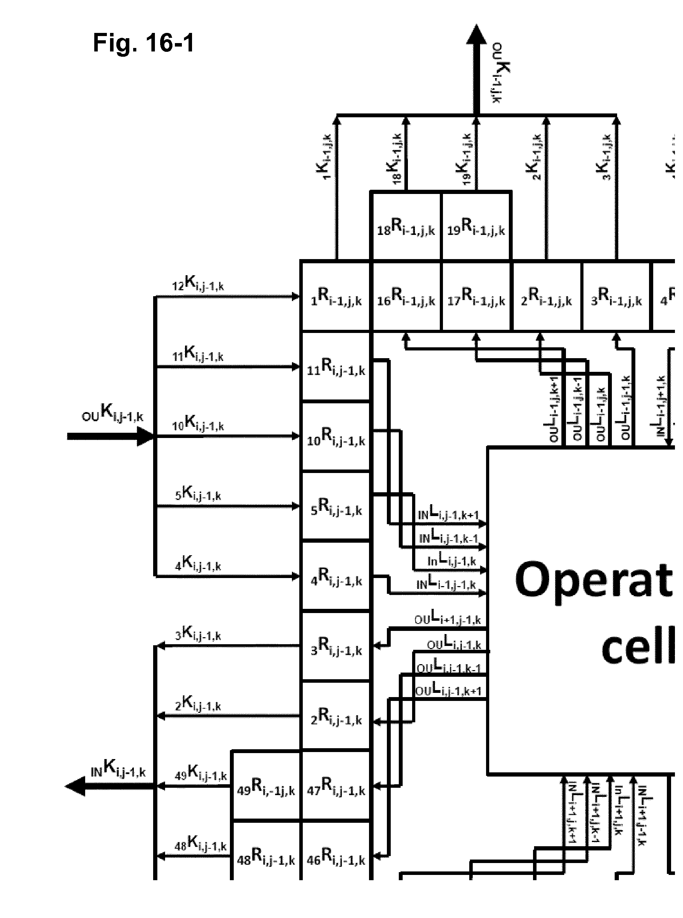

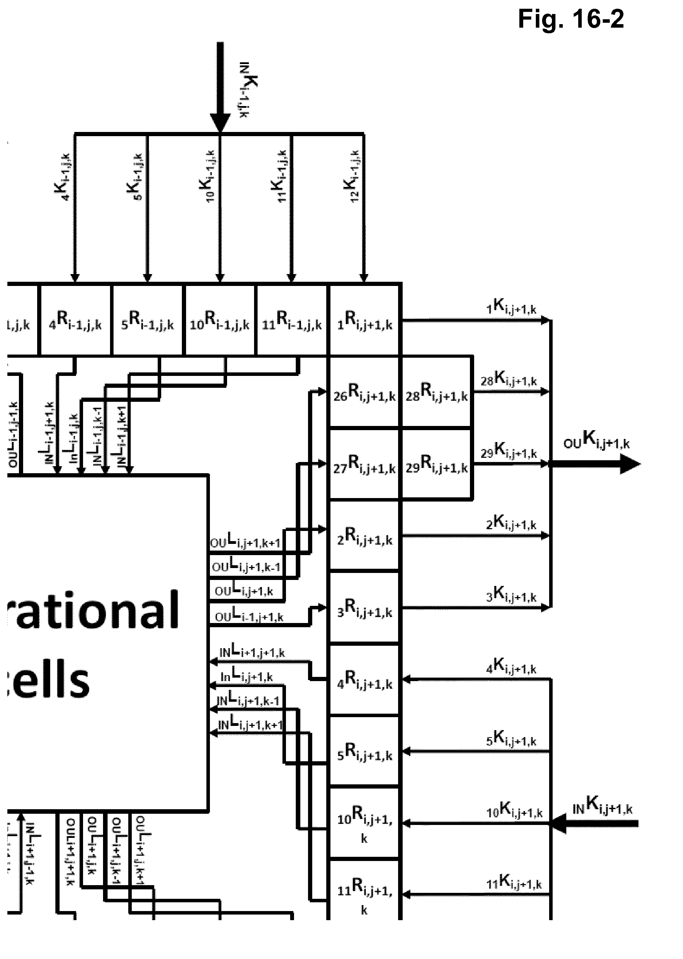

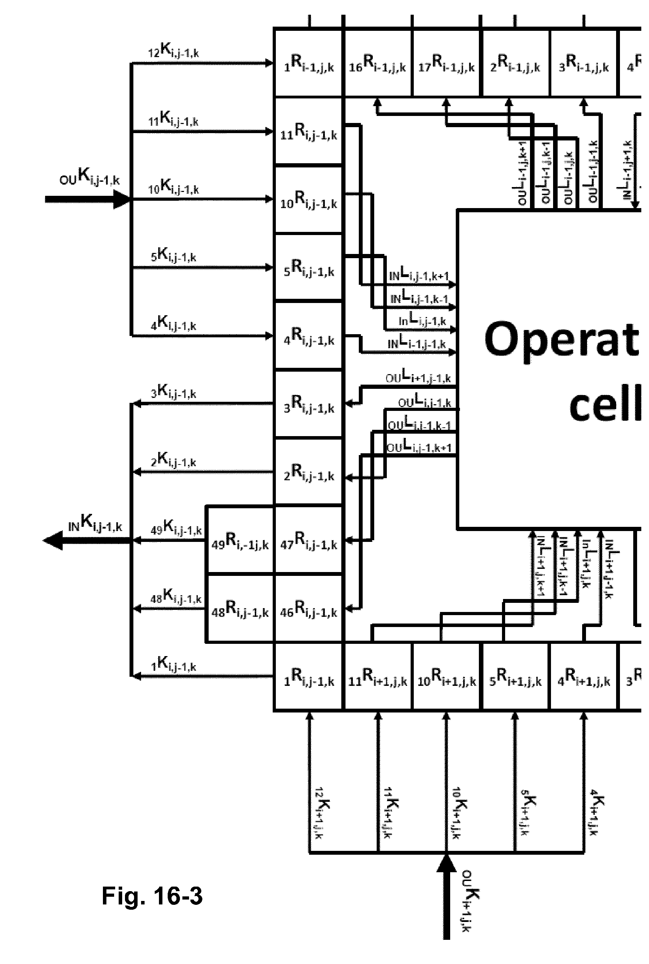

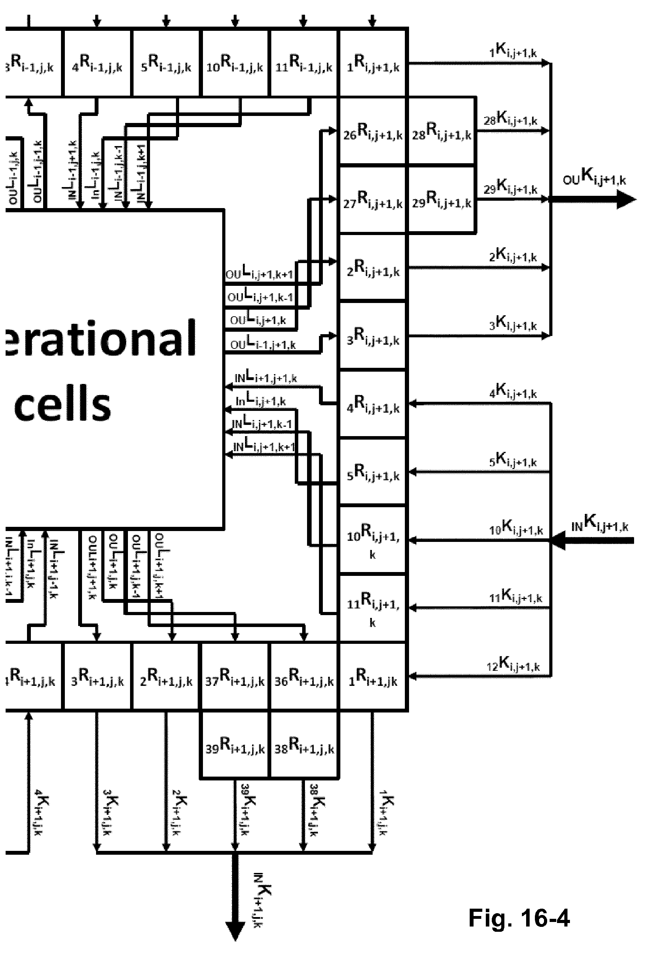

Fig. 16 shows a fragment of a logical circuit with designated areas of operational cells and selected registers R responsible for exchanging information between operational cells belonging to the different panels.

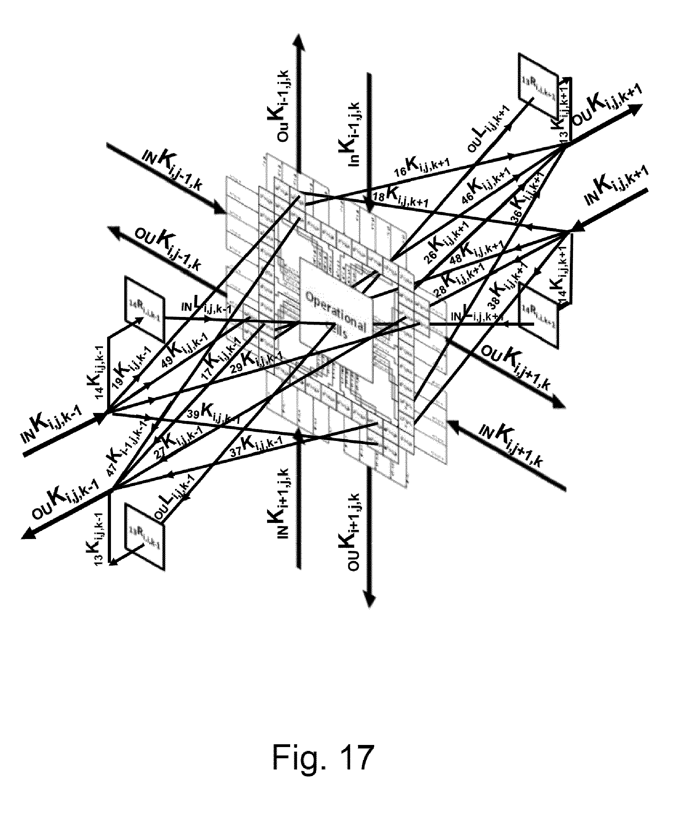

Fig. 17 shows a logical circuit with designated areas of operational cells and all registers R responsible for exchanging information between operational cells belonging to the same panel and to neighboring panels.

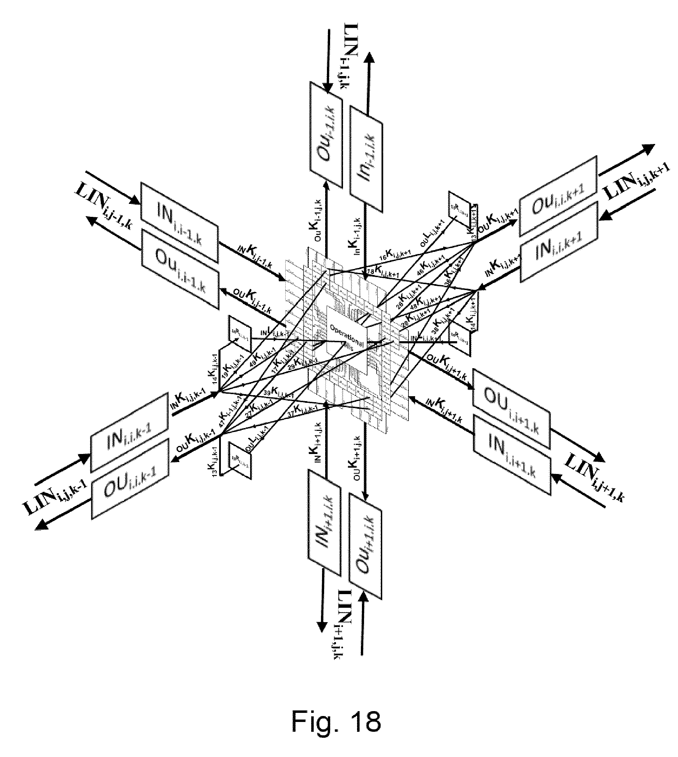

Fig. 18 shows a circuit with designated internal communication lines, input/output shift registers IN and OU and two-wire input/output lines LIN.

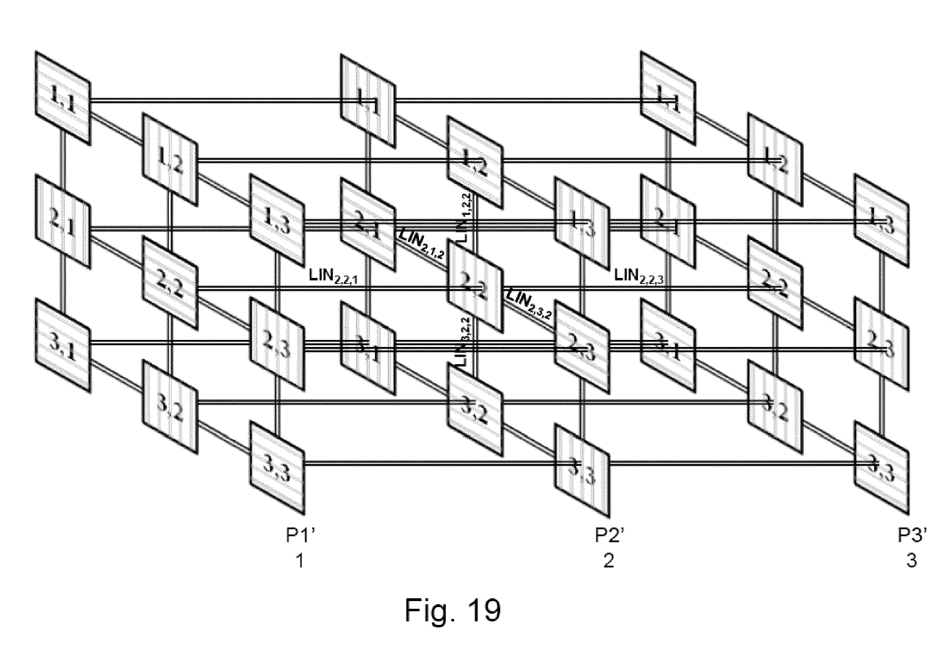

Fig. 19 shows an example of a machine.

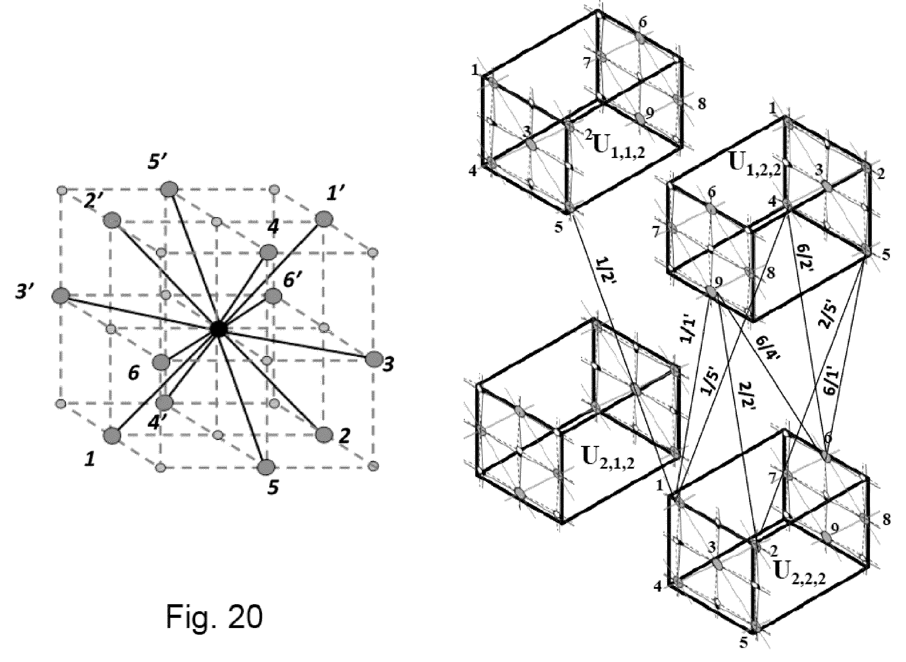

Fig. 20 shows designation of cell numbers and directions of transmission and reception of signals to and from the directional lines and registers for the basic and supplementary circuit.

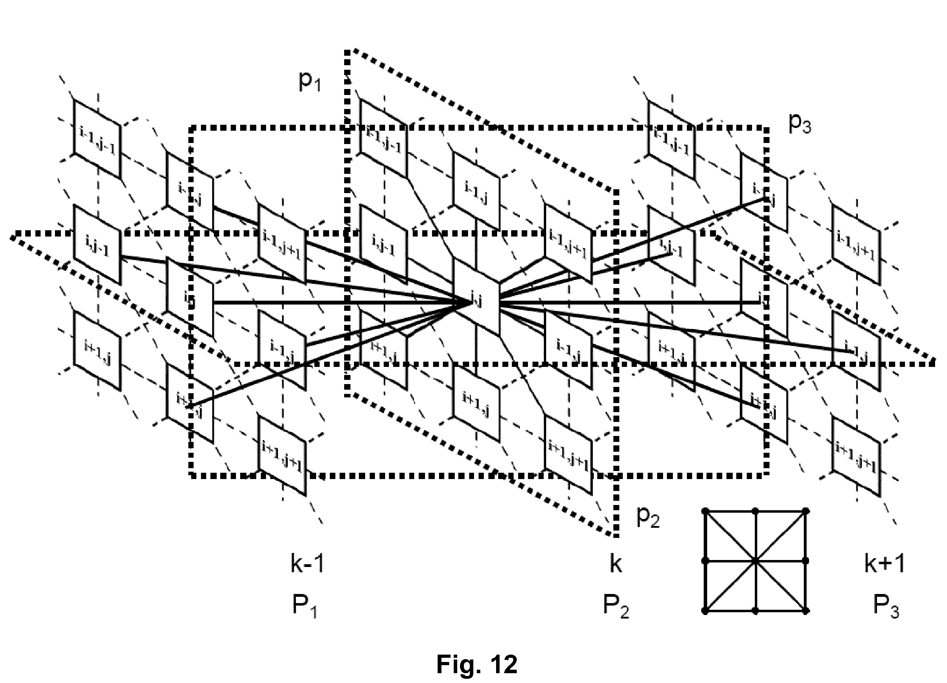

**Figs. 12****,** **19****,** **21** **and** **22** **show a second example** of a structure of a three-dimensional parallel machine comprising logical circuits with shift registers, wherein a counter-clockwise-edge data exchange system has been used, and wherein:

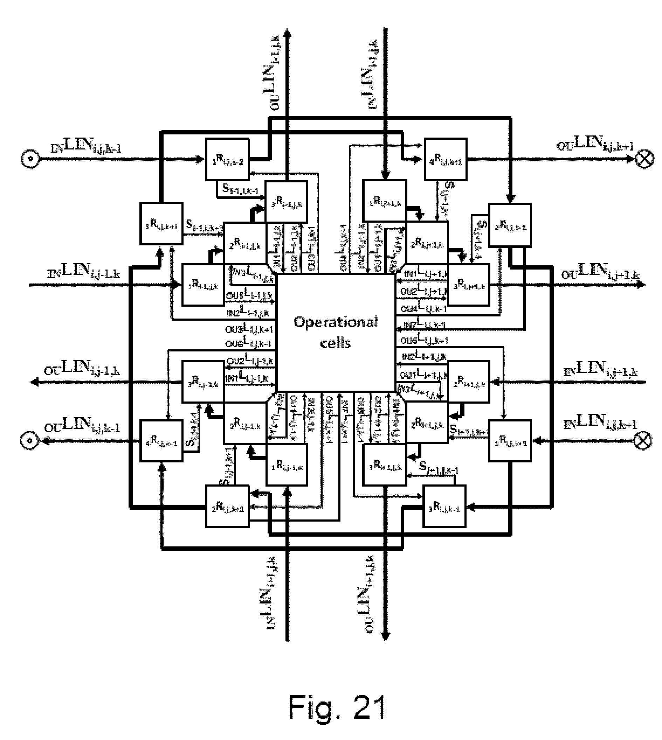

Fig. 21 presents a logical circuit comprising operational cells as well as shift registers, responsible for exchange of information between operational cells belonging to a single panel and the neighboring panels.

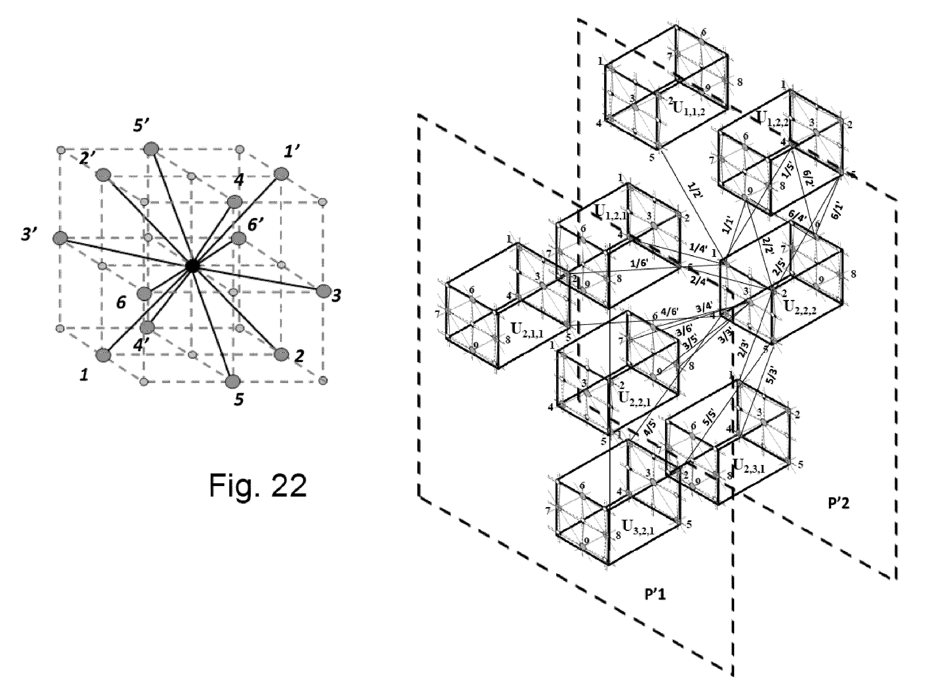

Fig. 22 presents an assignment of cell numbers and directions of transmitting/receiving signals to/from directional lines and registers, for basic and supplementary circuits.

### DETAILED DESCRIPTION

### Spatial arrangement of nodes in a face centered lattice

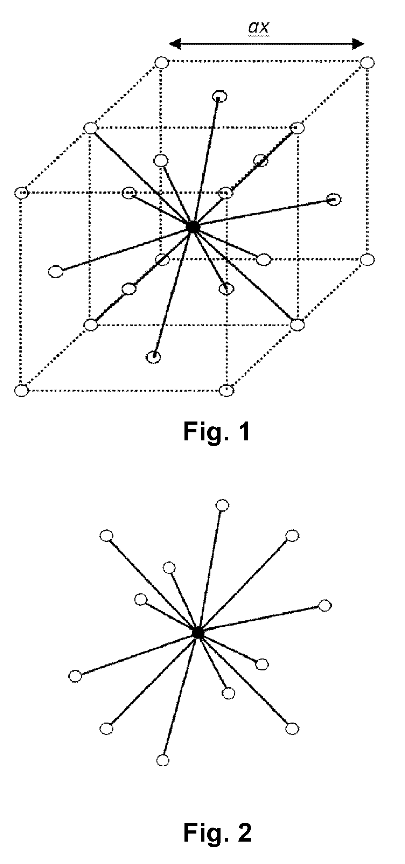

Fig. 1 presents a spatial arrangement of nodes in a face centered lattice having coordination number 12. The nodes of a Face Centered Cubic (FCC) are the points located in the centers of walls and at the corners of cubic modules of a cubic lattice having a side length of *ax*.

At the center of one of the walls of an elementary cell of a cubic lattice (cube), there is lo"cated a node, such as the node marked in Fig. 1 by a black dot, which has four neighboring nodes located on the same wall, at its corners and eight nearest neighboring nodes located at the centers of walls of the neighboring cubes. As a result, each node has 12 neighboring, parallel nodes.

After removal of the edges of the cubic lattice and nodes not positioned in the nearest neighborhood of the selected node, the section of the FCC shown in Fig. 2 is obtained.

### Intersection planes of a face centered lattice.

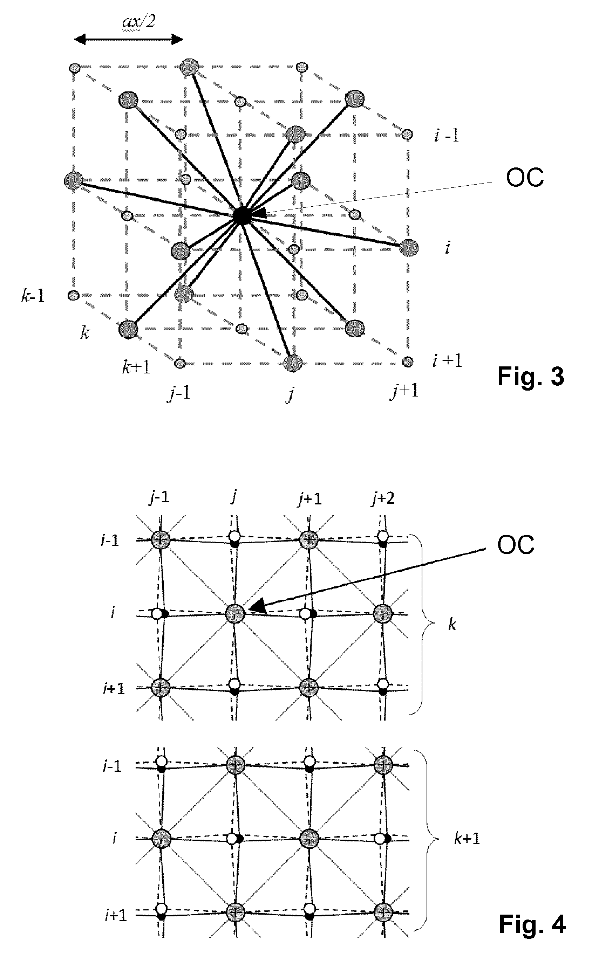

Nodes of an FCC form every other node of a reduced cubic lattice (RCL) having a side length of *ax*/2. Therefore, the FCC can be said to be "immersed" in the RCL, the structure of which is shown in Fig. 3. Indices *i, j, k* denote the location of nodes in the RCL.

An analysis of the section of an FCC shown in Fig. 3 results in a conclusion that there may be distinguished two kinds of parallel planes, positioned alternately with respect to each other, on which there are present nodes of the FCC. The first plane (hereinafter called a regular plane) extends over 5 nodes having the following coordinates: (*i*-1*, j*+1*, k),* (*i*+1*, j*+1*, k),* (*i*+1*, j-1, k),* (*i*-1*, j-1, k)* and (*i, j, k*). The second kind of a plane (hereinafter called a rotated plane) extends over 4 nodes having the following coordinates: (*i,j*+1*, k-1*)*,* (*i*+1*, j, k-1*)*, (i, j-1, k-1*) and (*i-*1*, j, k*-1) (the same plane comprises the following points (*i,j*+1*, k*+*1*)*,* (*i*+1*, j, k*+*1*)*, (i, j-1, k*+*1*) and (*i*-1*, j, k*+1)).

Fig. 4 presents a difference between a regular plane and a rotated plane. The large, grey points of Fig. 4 denote the nodes of the FCC, in the analyzed regular plane, while the black points denote the nodes in a preceding plane (i.e. "behind the page") whereas the white points are nodes in a following plane (i.e. "in front of the page") (for example, in a regular plane having an index k, the black points denote nodes in a rotated plane with index *k*-1, and the white points are nodes in a rotated plane with index *k*+1). The solid black lines denote interconnections of nodes positioned in the analyzed plane and its preceding plane. The grey lines interconnect nodes in the analyzed plane. The black dashed lines connect nodes positioned in the analyzed plane and its following plane.

It follows from Fig. 4 that the rotated plane is a regular plane shifted by one node of the reduced lattice RCL. Hereinafter, a plane in which the first point in the top left corner (*i*=1 and *j*=1) comprises an FCC node, will be called a regular plane. Otherwise, the plane will be called a rotated plane.

### Spatial configuration of operational cells in logical circuits

A parallel machine may utilize microprocessors, PLDs (Programmable Logic Devices) or ASICs (Application Specific Integrated Circuits). These circuits may be configured for implementing cells positioned at the nodes of a FCC lattice, comprising logical systems (hereinafter logical cells). The task of these logical cells is to execute logical operations, the result of which depends on the configuration of the cell (in case PLDs are used, such as FPGAs - Field-programmable Gate Arrays) or on the computer software (in case microprocessors are used) as well as on the signals that appear at their inputs in a particular moment.

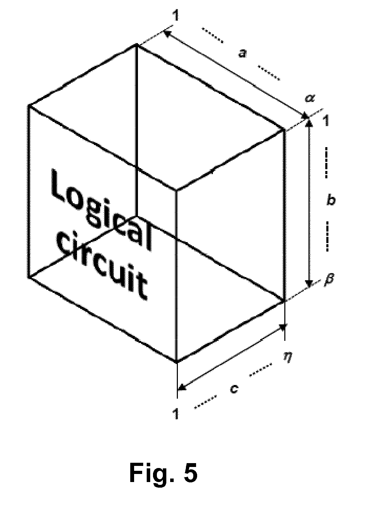

In every logical circuit, there are formed operational cells, having assigned thereto a position corresponding to every other node of the RCL lattice, out of the *α*β*η* nodes (Fig. 5). For an even number of nodes of a lattice, the number of cells comprised in the logical circuit is *α*β*η*/*2,* and when this number is odd, the number of these cells is equal to *α***β*η*/2-1 or *α*β* **η* /2+1.

### An example of an arrangement of interconnection and layout of operational cells positioned at 157 nodes, of an FCC lattice, in 9 logical circuits

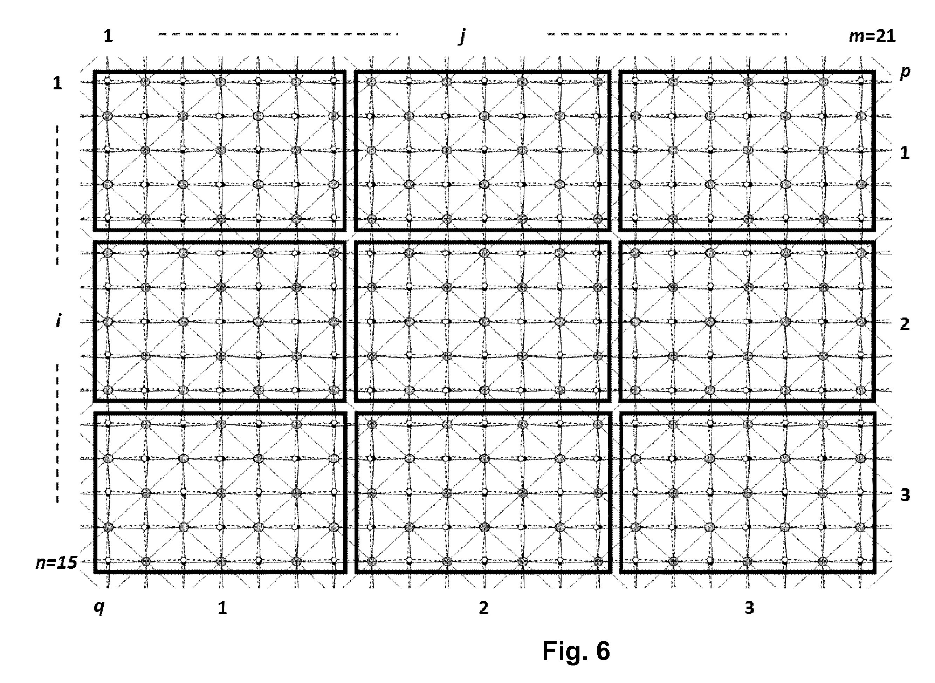

Fig. 6 presents an example of an interconnection arrangement and layout of operational cells positioned at 157 nodes, of an FCC lattice, in 9 logical circuits comprising one layer (*η*=1 see Fig. 5). Fig. 6 presents a rotated plane with operational cells positioned thereon. Indices *p* and *q* denote respective logical circuits. The meaning of points and lines is the same as in Fig. 4.

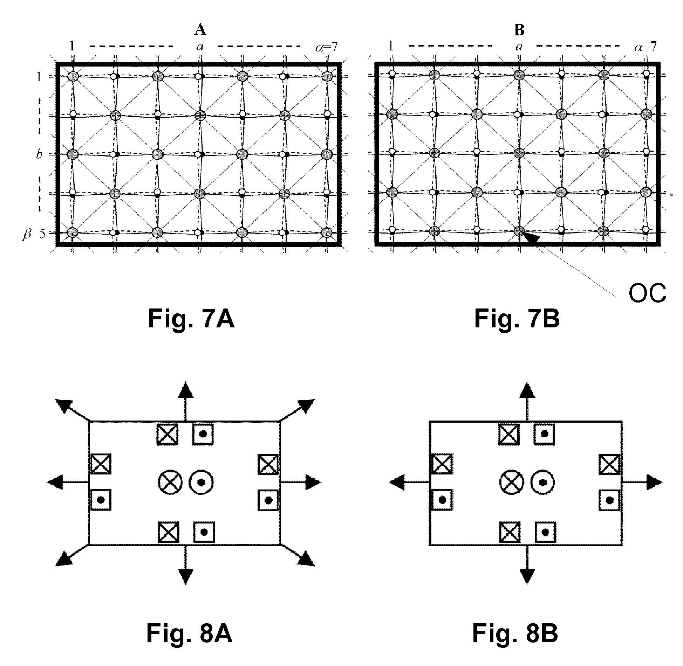

It follows from Fig. 6 that there are two kinds of configurations of logical circuits, which differ by the number of operational cells and directions of data transmission to the neighboring circuits. One configuration type (circuits with indices *p,q* equal to 1, 2; 2, 1; 2, 3 and 3, 2) includes logical circuits with 18 operational cells (Fig. 7A), in which the lines of communication (hereinafter called directional lines and designated with letter K (with indices)) with other circuits extend in the following directions:
1) 4 lines leftwards (i.e. to a circuit positioned on the left side) and 4 lines rightwards (i.e. to a circuit positioned on the right side);
2) 6 lines downwards (i.e. to a circuit positioned on the bottom side) and 6 lines upwards (i.e. to a circuit positioned on the top side);
3) 58 lines forwards (i.e. to a circuit positioned "in front of the page") and 58 lines backwards (i.e. to a circuit positioned "behind the page");
4) one line in each skewed directions in the plane (towards the corners of the system);
5) 3 lines in a skewed direction forwards and leftwards, 3 lines in a skewed direction backwards and leftwards, 3 lines in a skewed direction forwards and rightwards, 3 lines in a skewed direction backwards and rightwards (for example for a circuit with indices *p,q* equal 1, 2 to the plane "in front of the page" to circuits with indices p,q equal 1, 1 and 1, 3 as well as to the plane "behind the page" to circuits having the same indices *p,q*) (3 lines each)
6) 4 lines in a skewed direction forwards and upwards, 4 lines in a skewed direction backwards and upwards, 4 lines in a skewed direction forwards and downwards, 4 lines in a skewed direction backwards and downwards (e.g. for a circuit with indices p,q equal 1, 2 to the plane "in front of the page" to circuits with indices p,q equal 2, 2 and 0, 2 and to the plane "behind the page" to circuits of the same indices p,q) (4 lines each).

The second kind of configuration (circuits with indices p,q equal 1, 1; 1, 3; 2, 2; 3,1 and 3, 3) includes 17 operational cells (Fig. 7B), wherein the directional lines with other circuits extend in the following directions:
1) 4 lines leftwards (i.e. to a circuit positioned on the left side) and 4 lines rightwards (i.e. to a circuit positioned on the right side);
2) 6 lines upwards and 6 lines downwards;
3) 58 lines forwards (i.e. to a circuit positioned "in front of the page") and 58 lines backwards (i.e. to a circuit positioned "behind the page");
4) there are no lines in skewed directions in the same plane (i.e. towards the corners of the system);
5) 2 lines in a skewed direction forwards and leftwards, 2 lines in a skewed direction backwards and leftwards, 2 lines in a skewed direction forwards and rightwards, 2 lines in a skewed direction backwards and rightwards (for example for a circuit with indices *p,q* equal 2, 2 to the plane "in front of the page" to circuits with indices *p,q* equal 2, 1 and 2, 3 as well as to the plane "behind the page" to circuits having the same indices p,q)
6) 3 lines in a skewed direction forwards and upwards, 3 lines in a skewed direction backwards and upwards, 3 lines in a skewed direction forwards and downwards, 3 lines in a skewed direction backwards and downwards (e.g. for a circuit with indices *p,q* equal 2, 2 to the plane "in front of the page" to circuits with indices *p,q* equal 1, 2 and 3, 2 and to the plane "behind the page" to circuits of the same indices p,q)

The circuits are alternately positioned on a plane and form a pair called hereinafter a complementary pair, in which the arrangement shown in Fig. 7A is called a basic circuit, and the circuit shown in Fig. 7B is called a supplementary circuit. Inside the area covered by each of the circuits, there *α***β* = 35 nodes of a reduced lattice RCL. The basic circuit (Fig. 7A) comprises 18 operational cells, while the supplementary circuit (Fig. 7B) comprises 17 operational cells.

The directional lines are grouped into directional channels (K). The directions of the communication channels are shown in Fig. 8A for the basic circuit (shown in Fig. 7A) and Fig. 8B for the supplementary circuit (shown in Fig. 7b). The crossed circles denote a backward direction of a channel ("behind the page") while dotted circles denote a forward direction ("in front of the page"); the crossed squares and dotted squares denote respectively skewed directions backwards and forwards (leftwards, rightwards, upwards and downwards).

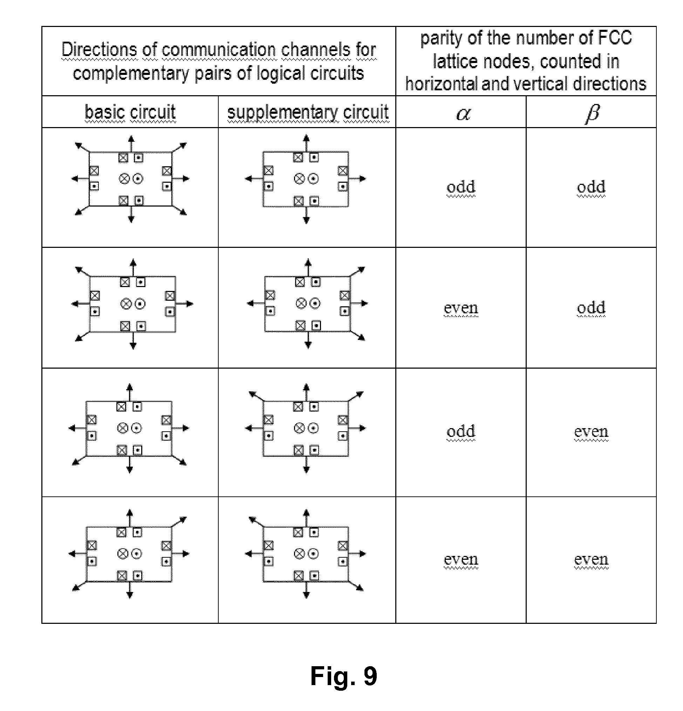

For a regular plane, depending on whether the numbers of rows *β* and columns *α* are even or odd, there may be distinguished 4 pairs of complementary circuits, for which directions of directional channels are shown in Fig. 9.

### An example of interconnection arrangement and layout of operational cells positioned at 157 nodes of an FCC lattice in 9 logical circuits.

If a logical circuit implements one plane having *β* rows and *α* columns, then the number of directional channels depends on the configuration of that circuit. However, if the number of planes is greater than 1, then all circuits have 18 directional channels in directions as shown in Fig. 8A. This difference in the number of directional channels is due to the alternate arrangement of basic configurations and supplementary configurations not only on one plane (see Fig. 6 and 7), but also in regular and rotated planes.

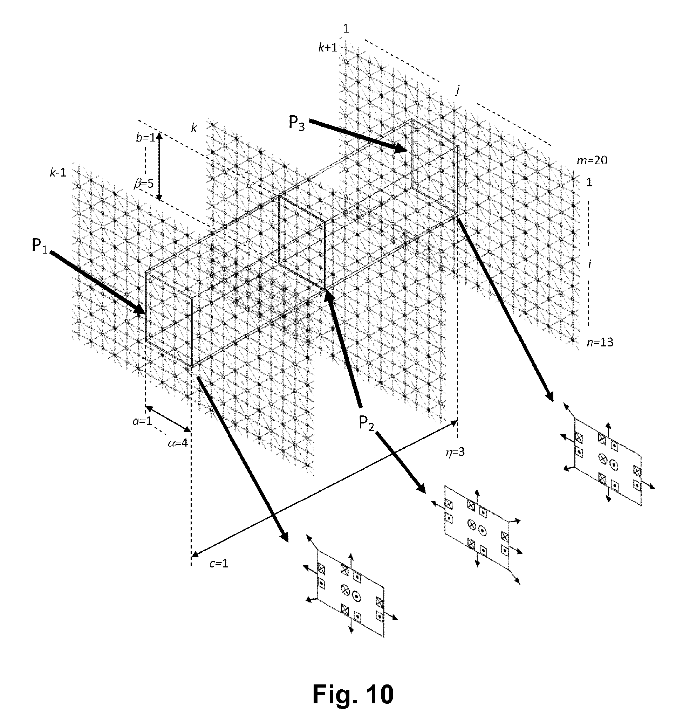

Fig. 10 presents an example of an arrangement of 3 sections of planes: two regular planes and one rotated plane, having dimensions of *α*=4, *β*=5 and *η*=3, covered by an equivalent logical circuit comprising 30 operational cells arranged at the nodes of a reduced lattice RCL.

The planes with indices c=1 and c=3 contain layers P₁ and P₃ of the logical circuit, wherein the directional channels in these planes correspond to the basic circuit for even *α* and odd *β*. On the rotated plane, with index c=2, layer P₂ of the logical circuit is present, in which the directional channels correspond to the supplementary circuit for even *α* and odd *β* (see Fig. 9). As a result of the respective layers being overlaid on each other, logical circuit comprises all possible directional channels shown in Fig. 8A.

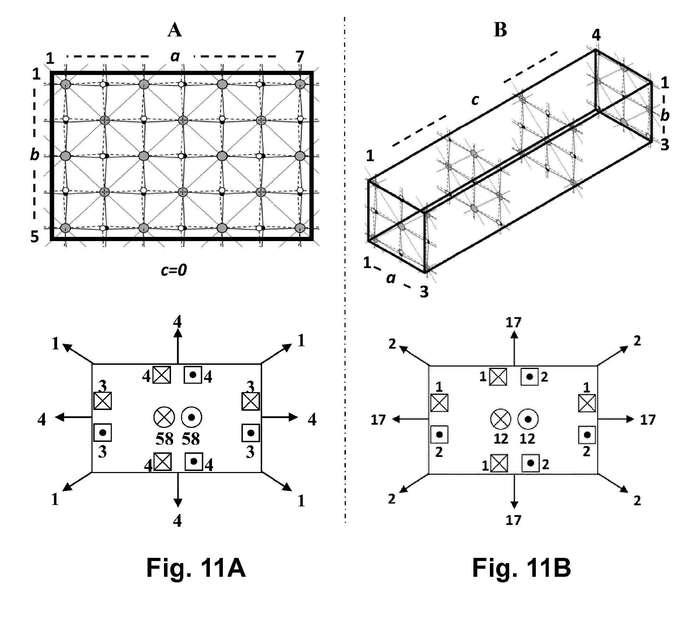

The number of directional lines, in each directional channel, depends on the number of configured operational cells in the logical circuits and on the mutual proportions between the values of *α, β* and *η* defining the number of these cells. For example, for a logical circuit comprising 18 cells in the configuration shown in Fig. 11A (a circuit comprising one regular plane), the number of outputs in the directional channels is different than for a logical circuit comprising the same number of cells, but having the configuration shown in Fig. 11B (a circuit comprising two regular planes and one rotated plane). Below the circuits, there are indicated numbers of directional lines in respective directional channels for both circuits.

### A design of a three-dimensional parallel machine, in which the operational cells are in a face centered lattice, using two-dimensional panels comprising logical circuits positioned at nodes of a face- and edge-centered square lattice.

The design of the machine starts by creating the logical circuits. Therefore, the operational cells must be configured according to their required functionality. Then, the number of cells must be defined, as well as the number of regular and rotated planes to be comprised in the logical circuit. Thereafter, the cells have to be indexed by three indices: a, b and c, each of which denotes the position of a node in the reduced lattice RCL (see Fig. 3, 4 and 5). Next, for cells with indices a, b, c, the following internal connections between the cells in directions Da, Db, Dc have to be made:
Da=a-1,Db=b,Dc=c-1
Da=a-1, Db=b+1, Dc=c
Da=a-1, Db=b, Dc=c+1
Da=a-1, Db=b-1, Dc=c
Da=a, Db=b+1, Dc=c-1
Da=a, Db=b+1, Dc=c+1
Da=a, Db=b-1, Dc=c+1
Da=a, Db=b-1, Dc=c-1
Da=a+1, Db=b, Dc=c-1
Da=a+1, Db=b+1, Dc=c
Da=a+1, Db=b, Dc=c+1
Da=a+1, Db=b-1, Dc=c

All the connections directed towards the cells, for which one of the directions Da, Db, Dc is lower than 1 or for which one of the following conditions is fulfilled: Da>*α*, Db>*β* or Dc>*η*, form directional lines, which shall be assigned to an appropriate directional channel. The logical circuits formed in this manner allow to design a three-dimensional parallel machine, in which operational cells are in a face centered cube (FCC) lattice. Each of such circuits is positioned on a flat board at the nodes of the square lattice, which is face- and edge-centered (see the insert in Fig. 12).

The directions of internode connections of this lattice are in line with the directions of directional channels shown in Fig. 8A. It follows from the analysis made with reference to description of Fig. 8A, 8B, 9 and 10, that in order to provide appropriate communication for any configuration, each logical circuit should be equipped with directional channels in all 18 directions considered.

Fig. 12 presents a fragment of machine comprising 27 logical circuits. It is formed of three vertically positioned, flat panels P1, P2 and P3 (indicated by indexes *k-1, k, k*+*1*) each comprising 9 logical circuits positioned at the nodes of a square lattice, face- and edge-centered. For clarity of the drawing, only the logical circuit denoted by indices (*i,j,k*) has all directional channels indicated. The solid lines denote directions of directional channels for a circuit having a location of (*i,j,k*)*.* The dashed lines denote directional channels, positioned in the planes of the panel for the remaining circuits.

The insert at the right, bottom part of the drawing presents an elementary cell of a square lattice, face- and edge-centered. In each circuit, there are configured *α*β*η*/*2* (or *α*β*η*/2-1 or *α***β***η*/2+1) operational cells positioned at the nodes of the FCC. The directional channels allow for direct interconnection of the operational cells of neighboring logical circuits (e.g. circuit denoted by indices (*i,j,k*) is connected in the plane of panel 2 with circuits denoted by indices (*i*-1*,j*-1*,k*); (*i*-1*,j,k*); (*i-*1*,j*+1*,k*); (*i,j*+1*,k*); (*i*+1*,j*+1*, k*); (*i*+1*,j,k*)*;* (*i*+1*,j*-1*,k*) and (*i,j*-1*,k*)*,* with circuits having numbers (*i,j,k*-1); (*i-*1*,j,k*-1); (*i,j*+1*,k*-1); (*i*+1*,j,k*-1) and (*i,j*-1*,k*-1) on panel 1 and with circuits (*i,j,k*+1); (*i-*1,*j,k*+1); (i*,j*+1*,k*+1); (*i*+1,*j,k*+1) and (*i,j*-1*,k*+1 on panel 3).

It follows from Fig. 12 that the logical circuits are interconnected physically such that they form a plurality of face- and edge-centered, square lattices, whose topologies, in the planes that are oriented in three different directions: planes parallel to the plane of the panel (for example plane p1 parallel to the panel P1), and planes perpendicular to the plane of the panel (for example, the plane p2 crossing, in a horizontal direction, circuits from *(i, j*-1); (*i, j*) and (*i, j*+1) and a plane p3 crossing circuits (*i*-1*, j*); (*i, j*) and (*i*+1*, j*) in a vertical direction).

Therefore, each logical circuit of the panel P1 belongs to three face- and edge-centered, square lattices in three planes - for example, circuit (*i,j,k*) belongs to lattices positioned in planes p1, p2 and p3. Therefore, each logical circuit has 18 connections with other circuits. The presented assumptions are related to internal circuits, which are not positioned at the edges of panels nor at the outer panels.

In the actual implementation of the invention, all logical circuits are connected to each other physically, so as to form a universal three-dimensional parallel machine, which can be used to implement various FCCs. In order to implement a particular FCC in the parallel machine according to the invention, the individual operational cells of the lattice have to be assigned to the logical circuits, by specifying the parity *α*, *β* of the number of nodes of the lattice, which are assigned to the individual circuits, and based on this the type of a basic circuit and of the supplementary circuit is selected.

The selected type of complementary pair determines which physical connections are to actually handle directional channels - the activity of physical connections is therefore dependent on the implemented FCC. In the machine according to the invention, these connections are provided between all circuits, so as to enable implementation of any FCC configuration.

The cells at the edges of the panels and at the "outer" walls of panels 1 and 3, due to a spatially-limited structure of the machine, do not have all connections. However, in numerous applications there may be implemented cyclic (or periodic) boundary conditions by connecting the top edges of each panel with its bottom edges by corresponding directional channels. This may be similarly applied to the remaining two edges, as well as to the "outer" walls of the panels 1 and 3.

### Reduction of the number of directional channels and directional lines.

In the machine shown in Fig. 12, the number of directional channels, for a single logical circuit equals 18 (except for a special implementation case related to a single logical circuit, of a single layer, being part of a regular or rotated plane).

The physical implementation of a machine comprising such circuits is difficult, because it requires use of a large number of connections between different elements of the system, in particular for machines having the number of circuits reaching tens or hundreds of thousands of logical circuits. This is caused by the high number of connectors and wires or optical fibers and their high cost, as well as by the need to ensure reliable operation of the complete system. Therefore, there is a need decrease the number of directional channels between the logical circuits.

The solution presented below allows for reduction of the number of directional channels, between respective logical circuits, from 18 to 6. It is based on accumulation of directional channels in specific groups and signal transmission to neighboring circuits in two stages.

At first, the logical circuits have to be positioned on a plane at the nodes of a square lattice and there have to be defined directions of directional channels for each circuit positioned at location *i, j -* as shown in Fig. 12. Indices *i, j denote* the location of a circuit on the panel, while index k denotes a panel.

Then, latch and shift registers (R) are assigned to individual directional lines belonging to directional channels of circuit *i*, *j.* The functions of these registers and the topology of their connections, depending on the circuit configuration, may differ among each other.

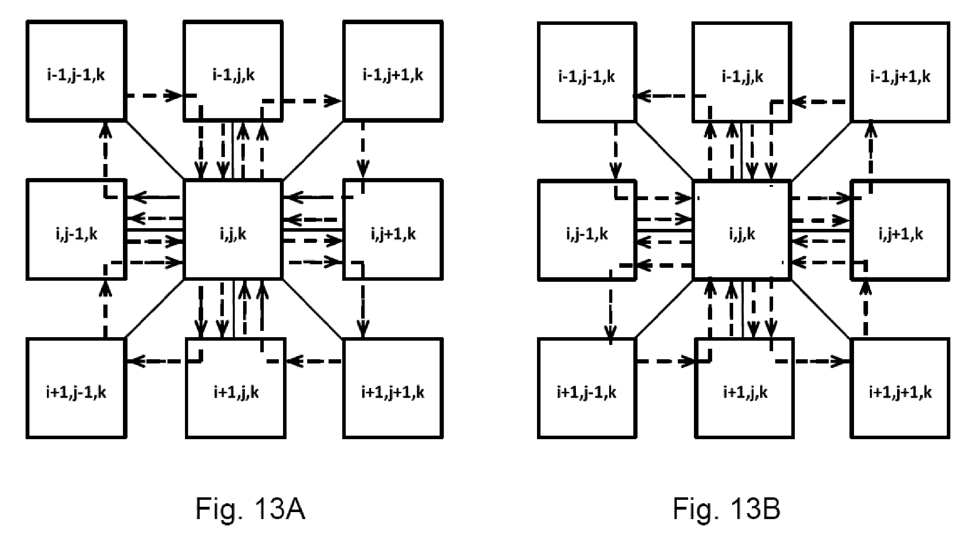

Figs. 13A, 13B show two methods of exchanging data between neighboring logical circuits in the plane of the panel in 8 directions: (*i*-1*,j*-1*,k*)*,* (*i-*1*,j,k*)*,* (*i-*1*,j*+1*,k*)*,* (*i,j*+1*,k*)*,* (*i*+1*,j*+1*,k*)*,* (*i*+1*,j,k*)*,* (*i*+1*,j*-1*,k*) and (*i,j*-1*,k*)*.* They are based on two-stage transmission of data in 4 directions: upwards, rightwards, downwards and leftwards.

Fig. 13A shows a clockwise data transmission method, as indicated by the arrows. The panel has 9 logical circuits, wherein for one circuit (having indices (*i,j,k)*) the solid lines designate data transmission directions and the dashed lines designate "traces", along which the data exchange is effected. The simultaneous data exchange between the logical circuit having indices (*i,j,k*) and the circuits having indices (*i*-1*,j,k*); (*i,j*+1*,k*); (*i*+1*,j,k*) and (*i,j*-1*,k*) is effected simultaneously by means of two parallel lines. On the other hand, the exchange of data with circuits having indices (*i*-1*,j*-1*,k*)*,* (*i-*1*,j*+1*,k*)*,* (*i*+1*,j*+1*,k*) and (*i*+1*,j*-1*,k*) is effected by means of logical circuits from which the circuit having indices (*i,j,k*) is connected directly. In the first stage, the data are transmitted to: circuits having indices (*i*-1*,j,k*) *-* upwards, (*i,j*+1*,k*) - rightwards, (*i*+1*,j,k*) *-* downwards *and* (*i,j*-1*,k*) *-* leftwards. At the same time, these circuits receive data transmitted by the circuits to which the present circuit sends information, and therefore: the circuit having index (*i*-1*,j*-1*,k*) sends data to circuit having index (*i,j*-1*,k*) *-* rightwards, circuit (i-1,*j*+1,*k*) to circuit (i,j+1,k) - downwards, circuit (*i*+1 *j*+1*,k*) to circuit (*i+1,j,k) -* leftwards and circuit (*i*-1 *,j*+1*,k)* to circuit (*i,j-1,k*) *-* upwards. In the second stage, the data received in the first stage from circuit having index (*i,j,k*) are further transmitted by the circuits having indices (*i-*1*,j,k*)*,* (*i,j*+1*,k*)*,* (*i*+1*,j,k*) *and* (*i,j*-1*,k*) respectively: rightwards, downwards, leftwards and upwards. At the same time, the present circuit receives information sent by the circuits having indices (*i,j*-1,*k*) - from the left, (*i-*1*,j,k*) *-* from the top, (*i,j*+1*,k*) *-* from the right and (*i*+1*,j,k*) *-* from the bottom. After the above operations are executed, the logical circuit having indices (*i,j,k*) has exchanged data with all eight neighboring logical circuits located on the same panel.

Fig. 13B shows a counter-clockwise method for transmitting data, wherein the data is exchanged in a manner similar to the clockwise method, but the direction of data transmission is opposite to the clock.

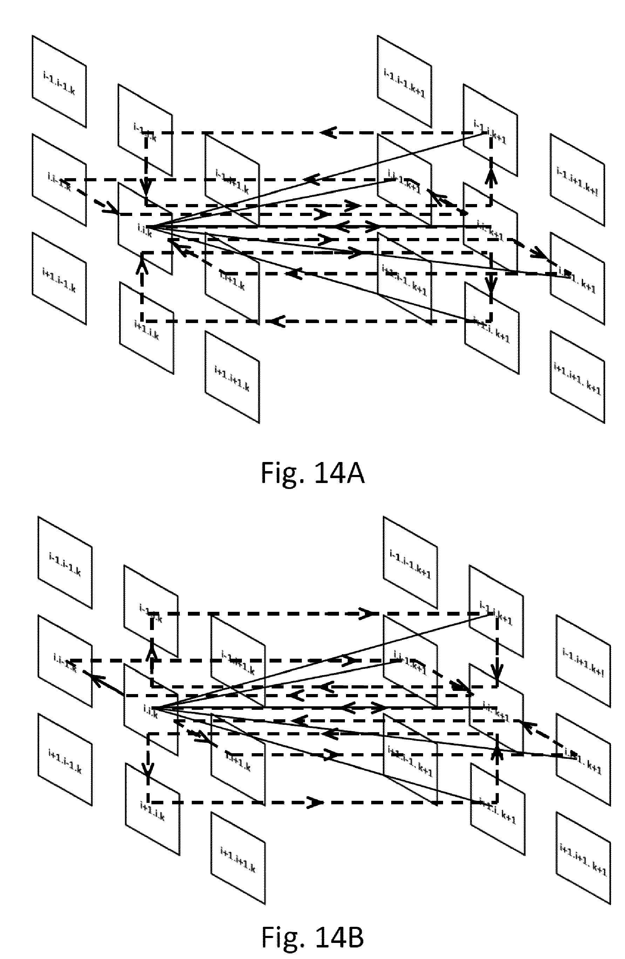

Fig. 14A shows a method for transmitting data between neighboring panels. The drawing shows only communication between the panel having index (k) and the neighboring panel having index (*k*+*1*). The solid lines indicate directions of data exchange and the dashed lines indicate the traces along with data are transmitted to the recipients. The data transmission scheme as shown in Fig. 14A, information to a circuit having indices (*i,j,k*) are transmitted from the neighboring panel via circuits located in the direct neighborhood (to the right, to the left, above and below) and therefore the scheme will be called as an "edge". Similarly to the two-dimensional case, data between the logical circuit having indices (*i,j,k*) and circuits located on the neighboring panel are transmitted in two stages. In the first stage, the present circuit exchanges data with a circuit (having indices (*i,j,k*+1)) located opposite it on the neighboring panel. Data addressed directly to the circuits exchanging data are delivered to its recipients at the first stage of the data exchange (as indicated by the dashed line overlaid with the bidirectional arrow ,,"↔"). At the same time, the circuits having indices (*i-*1*,j,k*)*,* (*i,j*+1*,k*)*,* (*i*+1*,j,k*) and (*i,j*-1*,k*) exchange data with their neighbors located ahead of them on the panel having index (*k*+1). In the second stage, the circuit having indices (*i,j,k*) sends the data gathered in the first stage, which were directed by the circuit having index (*i,j,k*+1) to circuits located: ahead and upwards - (*i-*1*,j,k*)*,* ahead and rightwards - (*i,j*+1*,k*)*,* ahead and downwards - (*i*+1*,j,k*) and ahead and leftwards - (*i,j*-1*,k*)*.* At the same time, the present circuit receives data from directions (*i-*1*,j,k*)*,* (*i,j*+1*,k*)*,* (*i*+1*,j,k*) and (*i,j*-1*,k*)*.* The exchange of data with logical circuits on the panel having index (*k*-1) is effected in the similar manner as for the logical circuits on the panel having index (*k*+1). After the above-described operations are executed, the logical circuit having indices (*i,j,k*) has exchanged data with all ten logical circuits located on neighboring panels having indices (*k*-1) and (*k*+1).

Fig. 14B shows a method for exchange of data called as a "central" method, wherein all data are transmitted to a circuit with indices (*i,j,k*) from circuits with indices (*i,j,k-*1) and (*i,j,k*+1) located "ahead". The data exchange is performed according to a scheme similar to the "edge" method, but in opposite direction.

Stages I and II of data exchange can be performed simultaneously for two dimensions (in the plane of the panel) and three dimensions (between the panels). Data exchange can be effected between all intercommunicating logical circuits according to one of four data exchange methods presented below: clockwise-edge, clockwise-central, counter-clockwise-edge or counter-clockwise-central.

### FIRST EXAMPLE

### Reduction of directional channels

### A circuit designed for counter-clockwise data exchange between logical circuits located in a single plane

Operational cells located inside the logical circuit transmit and receive signals from their nearest neighbors in the plane having *index k* by means of 8 input communication lines _{IN}L_{*i-1,j*+*1,k*}, _{IN}L*_{i-1,j,k},* _{IN}L_{i+*1,j*+}*_{1,k},* _{IN}L_{*i,j*+}*_{1,k},* _{IN}*L*_{*i*+}*_{1,,j-1,k},* _{IN}L_{*i*+}*_{1,j,k},* _{IN}*L_{i-1,j-1,k},* and _{IN}L*_{i,j-1},ₖ* and 8 output communication lines _{OU}*L_{i-1,j,k},* _{OU}L*_{i-1,j-1,k},* _{OU}*L*_{*i,j*+*1,k,* OU}*L*_{*i-1,j*+}*_{1,k},* _{OU}L_{*i*+1}*_{,j,k},* _{OU}L_{*i*+*1,j*+1*,k*}, _{OU}L*_{i,j-1,k}* and _{OU}L_{*i*+*1,j-1*,*k*} - as shown in Fig. 15. For the input communication lines _{IN}L the indices *i,j,k* indicate the logical circuit, from which a bit of information has been received. On the other hand, for the output lines _{OU}L the indices *i,j,k* indicate the logical circuit, to which the bit of information will be transmitted. Fig. 15 shows a fragment of a logical circuit with designated areas of operational cells and registers R responsible for exchange of data between the operational cells belonging to a single panel. The directional lines ₁K, ₂K, and ₃K are assigned to directional channels with symbols _{OU}K, and directional lines ₄K, ₅K, and ₁₂K are designated to directional channels _{IN}K. Indices *i,j,k* designate signal transmission directions. The signals transmitted to or from the neighboring cells are transmitted to registers R (according to the directions indicated on Fig. 15). The inputs and outputs of registers ₁R are connected directly with the input directional lines ₁₂*K*_{*i,j-1,k* 12}*K*_{*i-1,j,k* 12}K_{*i,j*+*1,k*} and ₁₂*K*_{*i*+*1,j,k*} and with the output directional lines ₁*K*_{*i-1,j,k* 1}*K*_{*i,j*+*1,k* 1}*K*_{*i*+*1,j,k*} and ₁*K_{i,j-1,k}* of the directional channels _{IN}K and _{UO}K. The signals from the outputs of registers ₁R, ₂R and ₃R are transmitted by means of directional lines ₁*K*_{*í-1,j,k* 1}*K*_{*i,j*+*1,k* 1}*K*_{*i*+}*_{1,j,k},* ₁K*_{i,j-1,k},* ₂*K*_{*i-1,j,k* 2}K_{*i,j*+*1* 2}*K*_{*i*+}*_{1,j,k},* ₂K*_{i,j-1,k},* ₃K_{*i*-*1,j,k*} 3K_{*i,j*+*1,k* 3}K_{*i*+*1,j,k*} and ₃K_{*i,j*-*1,k*} in 4 directions represented by directional channels _{OU}K*_{i-1,j,k},* _{OU}K_{*i*,*j*+}*_{1,k},* _{OU}K_{*i*+}*_{1,j,k},* and _{OU}*K_{i,j-1,k}.* The directional lines belonging to these directional channels are connected with directional lines belonging to directional channels _{IN}K', _{IN}K", _{IN}K'" and _{IN}K"" of the 4 neighboring logical circuits having respectively indices *i*-1*,j,k*; *i,j*-1*,k*; *i*+*1,j,k* and *i,j*-1*,k* in the following manner: (₁K_{*i-1,j,k*↔4}K'*_{i,j,k}*); (₁K_{*i,j*+*1*,}*k*↔₄K"*_{i,j,k}*); (₁K_{*i*+*1,j,k*}↔₄K"'*_{i,j,k}*); (1K*_{i,j-1}*↔₄K""*_{i,j,k}*); (₂K*_{i-1,j,k}*↔₅K*'_{i,j,k}*); (₂K*ᵢ,*_{*j*+*1,k*}↔₅K"*_{i,j,k}*); (₂K_{*i*+}*_{1,j,k}↔*₅K"'*_{i,j,k}*); (₂K*_{i,j-1,k}*↔₅K""*_{i,j,k}*); (₃K*_{i-1,j,k}*↔₁₂K*'_{i,j,k}*); (₃K_{*i,j*+*1*,*k*}↔₁₂K"*_{i,j,k}*); (₃K_{*i*+}*_{1,j,k}↔*₁₂K"'*_{i,j,k}*) and (₃K_{*i,j*-*1,k*}↔₁₂K""_{*i*,*j,k*}). In parallel machines, all elements of the circuit operate simultaneously, executing particular operations synchronously, therefore when the outputs of registers ₁R, ₂R and ₃R there appear signals directed from circuit *i,j* to its neighbors, then on the inputs of registers ₁R, ₄R and ₅R there appear signals coming from neighboring circuits. All circuits "at a single moment" transmit and receive one bit of data.

In the indicated moment, the binary logical states on the communication lines OUL*_{i-1,j,k}*, _{OU}L*_{i-1,j-1,k},* _{OU}L_{*i,j*+*1,k*}, _{OU}*L*_{*i-1,j*+}*_{1,k},* _{OU}L_{*i*+*1,j*,*k*}, _{OU}L_{*i*+*1,j*+1*,k*}, _{OU}L*_{i,j-1,k}*, and _{OU}L_{*i*+*1,j*-*1*,*k*} of the logical circuit are stored in the register pairs (₂R*_{i-1,j,k}* and ₃R*_{i-1,j,k}*); (₂*R*_{*i,j*+*1,k*} and ₃R*ᵢ,*_{*j*+}*_{1,k});* (₂R_{*i*+*1,j,k*} and ₃R _{*i*+*1,j,k*}) and (₂R_{*i*,*j*-*1,k*} and ₃R *_{í,j-1,k}*)*.* The outputs of these registers are signals which appear on the directional lines (₂*K_{i-1,j,k}* and ₃K*_{i-1,j,k}*); (₂K_{*i,j*+*1,k*} and ₃K _{*i,j*+*1,k*}); (₂K_{*i*+*1*,*j,k*} and ₃K _{*i*+*1,j,k*}) and (₂K*_{i,j-1,k}* and ₃K*_{i,j-1,k}*)*,* respectively, of the directional channels _{OU}K*_{i-1,j,k},* _{OU}K_{*i*,*j*+}*_{1,k},* _{OU}*K*_{*i*+*1,j,k*} and _{OU}*K_{i,j-1,k}.* In order to transmit data bits which are at the outputs of registers ₂R and ₃R to the neighboring logical circuits located in the same plane of the panel, and to simultaneously receive bits transmitted by the neighbors, the following operations are performed:
1_2D The logical circuit stores in register triplets (1R_{*i*-}*_{1,j,k},* ₄R*_{i-1,j,k}* and ₅R_{*i*-*1,j,k*}); (₁R_{*i,j*+}*_{1,k},* ₄R_{*i,j*+*1,k*} and ₅R_{*i,j*+}*_{1,k});* (₁R_{*i*+}*_{1,j,k},* ₄R_{*i*+*1,j,k*} and ₅R_{*i*+}*_{1,j},ₖ*) and (₁R*_{i,j-1,k},* ₄R*_{i,j-1,k}* and ₅R_{*i1,j*-*1,k*}) the state of the inputs of the directional lines (₁₂K*_{i,j-1,k},* ₄K_{*i-1,j,k* 5}K*_{i-1,j,k}*); (₁₂K*_{i-1,j,k},* 4K_{*i,j*+*1,k*}, ₅K_{*i,j*+*1,k*}); (₁₂K_{*i,j*+*1*,*k*}, ₄K_{*i*+}*_{1,j,k},,* ₅K_{*i*+*1,j,k*}) and (₁₂K_{*i*+*1,j,k*}, 4K*_{i,j-1,k},* ₅K*_{i,j-1,k})* thereby storing the information bits, which arrived from registers ₁R, ₂R and ₃R of the neighboring circuits. The logical states at the outputs of registers ₅R_{*i*-}*_{1,j,k},* ₅R _{*i,j*+}*_{1,k},* ₅R_{*i*+*1,j,k*} and ₅*R*_{*i*+*1,j,k*} appear on the communication lines _{IN}L*_{i-1,j,k},* _{IN}L_{*i,j*+}*_{1,k},* _{IN}L_{*i*+}*_{1,j,k},* and _{IN}L*_{i,j-1,k}* (one bit of information has been exchanged between the operational cells, located in the circuit having indices *i,j* on the panel having index k, and operational cells connected with them and implemented in the logical circuits having indices *i*-1*,j,k*; *i,j*+1*,k; i*+1*,j,k;* and *j,j*-1,*k*).

On the directional lines ₁K*_{i-1,j,k},* 1K*_{i-1,j,k},* ₁K*_{i-1,j,k}* and ₁K*_{i-1,j,k}* of directional channels _{OU}K_{*i*-}*_{1,j,k},* _{OU}K_{*i*,*j*+}*_{1,k},* _{OU}K_{*i*+*1,j,k*} and _{OU}K*_{i,j-1,k}* there appeared signal, which "in a moment" will be the output signals in the directional channels ₄K*'_{i,j,k},* ₄K*"_{i,j,k},* ₄K*'"_{i,j,k}* and ₄K""*_{i,j,k}* of the neighboring logical circuits. Similar signals will appear on the inputs of registers ₄R*_{i-1,j,k},* ₄R _{*i,j*+}*_{1,k},* ₄R_{*i*+}*_{1,j,k},* and ₄R_{*i*-}*_{1,j,k}.* At this stage of data transmission, the signals coming from the outputs of these registers do not carry information.

2_2D The logical circuit stores in registers ₄R*_{i-1,j,k},* ₄R _{*i,j*+}*_{1,k},* ₄R_{*i*+*1,j,k*} and ₄R*_{i,j-1,k}* the logical states of directional lines ₄K*_{i-1,j,k},* ₄K_{*i,j*+}*_{1,k},* ₄K_{*i*+*1,j,k*} and ₄K*_{i,j-1,k}*. The outputs of these registers will appear on the communication lines _{IN}*L_{i-1,j-1,k},* _{IN}L_{*i-1,j*+*1,k*}, _{IN}L_{i+1,*j*+1,*k*} and _{IN}L_{i+1,*j*-1,*k*} (one bit of information has been exchanged between the operational cells, located in the circuit having indices *i,j* on the panel having index k, and the operational cells connected with them and implemented in the logical circuits having indices *i*-1*,j*-1*,k*; *i*-1*,j*+1*,k*; *i*+1*,j*+1*,k*; and *i*+1*,j*-1*,k*)*.*

After the operations described in point 1_2D are performed first, and next the operations of point 2_2D are performed, all logical circuits located on the panel having index k have exchanged simultaneously one bit of information.

3_2D After the sent information bits are received from the communication lines _{IN}L*_{i-1,j,k},* _{IN}L_{*i,j*+}*_{1,k},* _{IN}L_{*i*+}*_{1,j,k},* _{IN}L_{*i,j-1,k* IN}*L_{i-1,j-1,k},* _{IN}L_{*i-1,j*+*1,k*}, _{IN}L_{i+1,}*j*_{+1,}*ₖ,* and _{IN}L_{i+1,}*j*_{-1,}*ₖ,* the logical circuit activates the new logical states of the communication lines _{OU}L*_{i-1,j,k},* _{OU}L*_{i-1,j-1,k},* OUL_{*i,j*+*1*,}*ₖ,* _{OU}*L*_{*i-1,j*+}*_{1,k},* _{OU}L_{*i*+}*_{1,,j,k},* _{OU}L_{*i*+*1,j*+1*,k*}, _{OU}L*_{i,j-1,k},* and _{OU}L_{*i*+*1,j-1,k*} which correspond to bits of the following information. They are stored in register pairs (₂R*_{i-1,j,k}* and ₃R *_{í-1,j,k}*); (₂R_{*i,j*+}*_{1,}k* and ₃R _{*i,j*+*1,k*}); (₂R_{*i*+*1,j,k*} and ₃R _{*i*+*1,j,k*}) and (₂R_{*i,j*-*1,k*} and ₃R *_{i,j-1,k})* and the procedure of information transmission between the logical circuits located in a single plane begins anew starting from point 1_2D.

### A circuit designed for edge data exchange between logical circuits located on neighboring panels

Fig. 16 presents a fragment of a logical circuit with all transmitting and receiving registers for communicating in the plane of the panel, among which the registers: ₁₀R_{*i*-*1,j,k*}, ₁₁R*_{i-1,j,k},* ₁₆R*_{i-1,j,k},* ₁₇R*_{i-1,j,k},* ₁₈R*_{i-1,j,k},* ₁₉R*_{i-1,j,k},* ₁₀R_{*i,j*+}*_{1,k},* ₁₁R_{*i,j*+}*_{1,k},* ₂₆R_{*i,j*+}*_{1,k},* ₂₇R_{*i,j*+*1*,}*ₖ,* ₂₈*R*_{*i,j*+}*_{1,k},* ₂₉R_{*i*,*j*+}*_{1,k},* ₁₀Ri+_{1,}j_{,k}, ₁₁R_{*i*+}*_{1,j,k},* ₃₆R_{*i*+}*_{1,j,k},* ₃₇R_{*i*+}*_{1,j,k},* ₃₈Ri+_{1,}j_{,k}, ₃₉R_{*i*+}*_{1,j,k}, ₁₀Ri,ⱼ-1,k,* ₁₁R*_{i,j-1,k},* ₄₆R*_{i,j-1,k},* ₄₇R*_{i,j-1,k},* ₄₈R*_{i,j-1,k}* and ₄₉R*_{i,j-1,k}* and four registers ₁₃R_{*i,j*,*k*-*1*}, ₁₄R *_{i,j,k-1},* ₁₃R_{*i,j,k*+*1*} and ₁₄R_{*i,j*,*k*+*1*} shown in Fig. 17 are responsible for information exchange between the operational cells belonging to different panels. The indices *i,j,k* designate directions of signal transmission.

The operational cells located in the logical circuit having indices *i,j* located on the panel having index k send and receive signals from the nearest neighbors located on panels having indices *k*-1 *and k*+1 by means of 20 communication lines (Fig. 16 and Fig. 17). Ten lines: _{IN}L*_{i-1,j,k-1},* _{IN}L*ᵢ,*_{*j*+}*_{1,k-1},* _{IN}L_{*i*+}*_{1,j,k-1},* _{IN}L*_{i,j-1,k-1}*, _{IN}L*_{i,j,k-1},* _{OU}L*_{i-1,j,k-1},* _{OU}L_{*i,j*+}*_{1,k-1},* _{OU}*L*_{*i*+}*_{1,j,k-1},* _{OU}L*_{i,j-1,k-1}* and _{OU}L*_{i,j,k-1}*, connected with the outputs of registers ₁₀R*_{i-1,j,k},* 10R_{*i,j*+}*_{1,k},* ₁₀R_{*i*+}*_{1,j,k},* ₁₀R*_{i,j-1,k},* ₁₄R*_{i,j,k-1}* and inputs of registers ₁₇R*_{i-1,j,k},* ₂₇R_{*i,j*+}*_{1,k},* ₃₇R_{*i*+}*_{1,j,k},* ₄₇R*_{i,j-1,k},* ₁₃R*_{i,j,k-1}* are responsible for information exchange with the panel having index *k*-1, while ten lines: _{IN}L_{*i*-*1,j,k*+}*₁,* _{IN}L_{*i,j*+*1,k*+}*₁,* _{IN}L_{*i*+*1,j,k*+}*₁,* _{IN}L_{*i,j-1,k*+*1* IN}L_{*i,j,k*+}*₁,* _{OU}L_{*i-1,j,k*+}*₁,* _{OU}L_{*i,j*+*1,k*+}*₁,* _{OU}L_{*i*+*1,j,k*+}*₁,* _{OU}L_{*i,j*+*1*,*k*+*1* OU}L_{*i,j,k*+}*₁,* connected with the outputs of registers ₁₁R*_{i-1,j,k},* ₁₁R_{*i*,*j*+}*_{1,k},* ₁₁R_{*i*+}*_{1,j,k},* ₁₁R_{*i*,}*_{j-1,k},* ₁₄R_{*i,j,k*+*1*} and inputs of registers ₁₆R*_{i-1,j,k},* ₂₆R_{*i,j*+}*_{1,k},* ₃₆Rᵢ₊*_{1,j,k},* ₄₆R*_{i,j-1,k},* ₁₃R_{*i,j,k*+1} are responsible for exchanging information with the panel having index *k*+1 For the input communication lines _{IN}L, the indices *i,j,k* indicate the logical circuit, from which a bit of information has been received. For the output lines _{OU}L the indices *i,j,k* indicate the logical circuit, to which a bit of information will be transmitted. Signal transmission towards the neighboring panels is effected by means of directional lines ₁₃K*_{i,j,k-1},* ₁₃K_{*i,j,k*+}*₁,* ₁₇K*_{i,j,k-1},* ₁₆K_{*i,j,k*+}*₁,* ₂₇K*_{i,j,k-1},* 26K_{*i,j,k*+}*₁,* ₃₇K*_{i,j,k-1},* ₃₆K_{*i,j,k*+}*₁,* ₄₇K*_{i,j,k-1}* and ₄₆K_{*i,j,k*+}*₁,* comprised in the directional channels _{OU}K*_{i,j,k-1}* and _{OU}*K*_{*i,j,k*+*1*} (see Fig. 17). Reception of signals from the directions of the neighboring panels is effected by means on directional lines ₁₄K*_{i,j,k-1}*, ₁₉*K_{i,j,k-1},* ₂₉K*_{i,j,k-1},* ₃₉K*_{i,j,k-1},* ₄₉K*_{i,j,k-1},* ₁₄K_{*i,j,k*+}*₁,* ₁₈K_{*i,j,k*+}*₁,* ₂₈K_{*i,j,k*+}*₁,* ₃₈K_{*i,j,k*+*1*} and ₄₈K_{*i,j,k*+*1*}, and indirectly also by means of lines ₁₀K*_{i-1,j,k}*, ₁₀K_{*i,j*+*1,k*}, ₁₀K_{*i*+*1,j,k*}, ₁₀K*_{i,j-1,k}*, ₁₁*K_{i-1,j,k},* ₁₁*K*_{*i,j*+}*_{1,k},* ₁₁K_{*i*+*1,j,k*} and ₁₁K*_{i,j-1,k}*, comprised in all directional channels _{IN}K. The signals input to neighboring circuits on the panel having index *k*-1 are transmitted via 5 registers ₁₇R*_{i-1,j,k},* ₂₇R_{*ij*+}*_{1,k},* ₃₇R_{*i*+}*_{1,j,k},* 47R*_{i,j-1,k},* and ₁₃R*_{i,j,k-1}*, and the signals received from this panel reach the 5 registers: ₁₉*R_{i-1,j,k},* ₂₉R_{*i,j*+}*_{1,k},* ₃₉R_{*i*+}*_{1,j,k},* ₄₉R*_{i,j-1,k},* and ₁₄R*_{i,j,k-1}.* Similarly, the signals output to the neighboring logical circuits on the panel having index *k*+1 are transmitted via 5 registers: ₁₆R*_{i-1,j,k},* ₂₆R_{*i,j*+*1*,*k*}, ₃₆R_{*i*+*1,j,k*}, ₄₆R*_{i,j-1,k},* and ₁₃*R*_{*i,j,k*+}*₁,* and signals received from this panel reach the 5 registers: ₁₈R*_{i-1,j,k},* ₂₈R_{*i,j*+*1*,*k*}, ₃₈R_{*i*+*1,j,k*}, ₄₈R*_{i,j-1,k}*, and ₁₄R_{*i*,*j,k*+*1*} (Fig. 16 and Fig. 17). The outputs of registers ₁₈*R_{i-1,j,k},* ₁₉R*_{i-1,j,k},* ₂₈R_{*i,j*+}*_{1,k},* ₂₉R_{*i,j*+}*_{1,k},* ₃₈R_{*i*+}*_{1,j,k},* ₃₉R_{*i*+}*_{1,j,k},* ₄₈R*_{i,j-1,k}* and ₄₉R_{*i,j-1*,*k*}, are connected with directional lines ₁₈K*_{i-1,j,k},* ₁₉K*_{i-1,j,k},* ₁₈K_{*i,j*+}*_{1,k-1},* ₁₉K_{*i,j*+}*_{1,k-1},* ₁₈K_{*i*+}*_{1,j,k-1},* ₁₉K_{*i*+}*_{1,j,k-1},* ₁₈K*_{i,j-1,k-1}* and ₁₉*K_{i,j-1,k-1},* by means of which the signals are transmitted further in the plane of the panel having index k in 4 directions represented by the directional channels _{OU}K*_{i-1,j,k},* _{OU}K_{*i*,*j*+}*_{1,k},* _{OU}K_{*i*+*1,j,*k}, and _{OU}*K_{i,j-1,k}.* The directional lines belonging to directional channels _{OU}*K*_{*i*-*1,j*,*k*}, _{OU}K_{*i*,*j*+}*_{1,k},* _{OU}K_{*i*+*1,j,k*}, and _{OU}K*_{i,j-1,k}* connect with the directional lines belonging to directional channels _{IN}K', _{IN}K", _{IN}K"' and _{IN}K"" of 4 neighboring logical circuits having, respectively, indices *i*-1*,j,k*; *i,j-*1*,k; i*+1*,j,k and i,j*-1*,k* in the following manner: (₁₈K*_{i-1,j,k}*↔₁₁K*'_{i,j,k}*); (₁₉K*_{i-1,j,k}*↔₁₀K*'_{i,j,k}*); (₂₈K_{*i,j*+*1,k*}↔₁₁K*"_{i,j,k}*); (₂₉K_{*i,j*+*1,k*}↔₁₀K*"_{i,j,k}*); (₃₈K_{*i*+*1,j,k*}↔₁₁K"'*_{i,j,k}*); (₃₉K_{*i*+*1,j,k*}↔₁₀K"'*_{i,j,k}*); (₄₈K_{*i,j*-*1,k*}↔₁₁K""*_{i,j,k}*); (₄₉K*ᵢ,*_{*j*-*1,k*}↔₁₀K""*_{i,j,k}*)*.* The directional lines (₁₀K-_{hUk}, *11 K_{í}-₁,j,k, ᵢ₀K*_{/}*ⱼ₊ᵤ,* ₁₁K_{*i,j*+}*_{1,k},* ₁₀K_{*i*+}*₁,_{j,k}*, ₁₁K_{*i*+}*_{1,j,k},* ₁₀K_{*i,j*-*1*,*k*}, and ₁₁K*ᵢ,ⱼ₋₁,ₖ*. are connected with the inputs of registers ₁₀R_{*i*-*1,j,k*}, ₁₁R*_{i-1,j,k},* ₁₀R_{*i,j*+}*_{1,k},* ₁₁R_{*i*,*j*+}*_{1,k},* ₁₀R_{*i*+}*_{1,j,k},* ₁₁R_{*i*+}*_{1,j,k},* ₁₀R*_{i,j-1,k}* and ₁₁R*_{i,j-1,k}.*

At the moment at which at the outputs of registers ₁₈R*ᵢ*-*_{1,j,k},* ₁₉R*_{i-1,j,k},* ₂₈*R*_{*i,j*+}*_{1,k},* ₂₉R_{*i,j*+}*_{1,k},* ₃₈R_{*i*+}*_{1,j,k},* ₃₉*R*_{*i*+}*_{1,j,k},* ₄₈R*_{i,j-1,k}* and ₄₉R*_{i,j-1,k}.* there appear signals directed from the circuit having index *i,j,k* to its neighbors, then at the inputs of registers ₁₁R*_{i-1,j,k}*, ₁₀R*ᵢ*-*_{1,j,k},* ₁₁R_{*i,j*+*1*,*k*}, ₁₀R_{*i,j*+}*_{1,k},* ₁₁R_{i+*1,j,k*}, ₁₀R_{*i*+}*_{1,j,k},* ₁₁R*_{i,j-1,k}* and ₁₀R*_{i,j-1},ₖ* there appear signals coming from the neighboring circuits. The outputs of registers ₁₀R_{*i*-*1,j,k*}, ₁₁R*_{i-1,j,k},* ₁₀R_{*i,j*+}*_{1,k},* ₁₁R_{*i*,*j*+}*_{1,k},* ₁₀R_{*i*+}*_{1,j,k},* ₁₁R_{*i*+}*_{1,j,k},* ₁₀R*_{i,j-1,k}* and ₁₁R*_{i,j-1},ₖ* are connected with the communication lines _{IN}L*_{i-1,j,k-1},* _{IN}L_{*i*-*1,j,k*+}*₁,* _{IN}L_{*i,j*+}*_{1,k-1},* _{IN}L_{*i,j*+*1,k*+}*₁,* _{IN}L_{*i*+}*_{1,j,k-1},* _{IN}L_{*i*+*1,j,k*+}*₁,* _{IN}L_{*i,j-1,k*- *1*}, and _{IN}L_{*i,j*-*1,k*+*1*} which are connected directly to the operational cells in the logicalcircuit.

In the indicated moment, the binary logical states present on the pairs of communication lines (_{OU}*L*_{*i-1j,k*+}*₁,* _{OU}L*_{i-1,j,k-1}*); (_{OU}L_{*i,j*+}*_{1,k-1},* _{OU}L_{*i,j*+*1,k*+*1*}); (OUL_{*i*+}*_{1,j,k-1},* _{OU}L_{*i*+1*,j,k*+*1*}); (_{OU}L*_{i,j-1,k-1}* OU*L*_{*i,j-1,k*+}*₁)* and (_{OU}L*_{i,j,k-1},* _{OU}L_{*i,j,k*+*1*}) of the logical circuit are stored in register pairs (₁₆R*_{i-1,j,k}* and ₁₇R *_{i-1,j,k}*); (₂₆R_{*i,j*+*1*,*k*} and ₂₇R_{*i,j*+*1,k*}); (₃₆R_{*i*+*1,j,k*} and ₃₇R_{*i*+}*_{1,j,k})* and (₄₆R_{*i,j*-*1*,*k*} and ₄₇R*_{i,j-1,k}*). The outputs of these registers are signals which appear on the directional lines (₁₆*K_{i,}j*_{*,k*+*1*} and ₁₇K*_{i,j,k-1}*); (₂₆*K*_{*i,j,k*+*1*} and ₂₇K*_{i,j,k-1}*); (₃₆K_{*i,j,k*+*1*} and ₃₇K_{*i,j,k*-*1*}) and (₄₆K_{*i*,*j,k*+*1*} and ₄₇K*_{i,j,k-1}*)*,* respectively, of directional channels _{OU}*K*_{*i,j,k*+*1*} and _{OU}K_{*i*,}*_{j,k-1}.* In order to simultaneously send data bits which are at the outputs of registers ₁₆R*_{i-1,j,k},* ₁₇R*_{i-1,j,k},* 26*R*_{*i,j*+}*_{1,k},* ₂₇R_{*i,j*+}*_{1,k},* ₃₆R_{*i*+*1,j,k*}, ₃₇R_{*i*+*1,j,k*}, ₄₆R*_{i,j-1,k}* and ₄₇R_{*i,j-1*,*k*} to the neighboring logical circuits located at neighboring panels having indices *k*-1 and *k*+1 and to receive bits sent from these panels, the following operations are carried out:
1_3D) The logical circuit stores in registers ₁₈*R_{i-1,j,k},* ₁₉*R_{i-1,j,k},* ₂₈R_{*i,j*+}*_{1,k},* ₂₉R_{*i,j*+}*_{1,k},* ₃₈R_{*i*+*1,j,k*}, ₃₉R_{*i*+}*_{1,j,k},* ₄₈R*_{i,j-1,k},* ₄₉R*_{i,j-1,k},* ₁₃R*_{i,j,k-1}* and ₁₃R_{*i,j,k*+*1*} the state of inputs of directional lines ₁₈K_{*i,j,k*+*1*}, ₁₉K_{*i,j,k*-*1*}, ₂₈K_{*i,j,k*+*1*}, ₂₉K*_{i,j,k-1},* ₃₈K_{*ij,k*+*1*}, ₃₉K*_{i,j,k-1},* 48K_{*i,j,k*+*1*, 49}K*_{i,j,k-1},* ₁₃K*_{i,j,k-1}* and ₁₃K_{*i,j,k*+}*₁,* thereby storing bits of information from the registers ₁₆R, ₁₇R, ₂₆R, ₂₇R ₃₆R, ₃₇R ₄₆R, ₄₇R and ₁₄R of circuits having indices *i,j,k*-1 and *i,j,k*+1 located on neighboring panels. The logical states at the outputs of registers ₁₃R_{*i,j*,*k-1*} and ₁₃R_{*i,j,k*+*1*} appear on the communicating lines _{IN}L_{*i,j,k*-*1*} and _{IN}L_{*i,j,k*+*1*} (one bit of information has been exchanged between the operational cells, located in the circuit having indices *i,j* on the panel having index k, and operational cells connected with them and implemented in the logical circuits having indices *i,j,k-*1 *and i,j,k*+1)*.*

On the directional lines ₁₈K*_{i-1,j,k},* ₁₉K*_{i-1,j,k},* ₂₈K_{*i,j*+}*_{1,k},* ₂₉K_{*i,j*+}*₁,ₖ,* ₃₈K_{*i*+}*_{1,j,k},* ₃₉K_{*i*+*1,j*,*k*}, ₄₈K*_{i,j-1,k}* and ₄₉K*_{i,j-1,k}* of directional channels _{OU}K*_{i-1,j,k},* _{OU}K_{*i*,*j*+}*_{1,k},* _{OU}K_{*i*+*1,j,k*} and _{OU}K*_{i,j-1,k}* there appeared signals, which "in a moment" will be the output signals on the directional lines ₁₁K*'_{i,j,k},* ₁₀K*'_{i,j,k},* ₁₁K*"_{i,j,k},* ₁₀K"*_{i,j,k},* ₁₁K"'*_{i,j,k},* ₁₀K"'*_{i,j,k},* ₁₁K*""_{i,j,k},* and ₁₀K""*_{i,j,k},* of neighboring logical circuits. Similar signals will appear on the inputs of registers 11R_{*i*-}*_{1,j,k},* ₁₀R*_{i-1,j,k}*, ₁₁R_{*i,j*+}*_{1,k},* ₁₀R_{*i,j*+}*_{1,k},* ₁₁R_{*i*+}*_{1,j,k},* ₁₀R_{*i*+*1,j,k*}, ₁₁R*_{i,j-1,k}* and ₁₀R*_{i,j-1,k}.* At this stage of data transmission, the signals coming from the outputs of these registers do not carry information.

2_3D) The logical circuit stores in registers ₁₁R*_{i-1,j,k},* ₁₀R_{*i*-*1,j,k*}, ₁₁R_{*i*,*j*+}*_{1,k},* ₁₀R_{*i,j*+}*_{1,k},* ₁₁R_{*i*+}*_{1,j,k},* ₁₀R_{*i*+}*_{1,j,k},* ₁₁R*_{i,j-1,k}* and ₁₀R_{*i,j*-*1,k*}. the logical states of their inputs. The logical states at the outputs of these registers will appear at the communication lines _{IN}L*_{i-1,j},*_{*k*-}*₁,* _{IN}L_{*i*-*1,j,k*+}*₁,* _{IN}L_{*i,j*+}*_{1,k-1},* _{IN}L_{*i,j*+*1,k*+}*₁,* _{IN}L_{*i*+}*_{1,j,k-1},* _{IN}L_{*i*+*1,j,k*+}*₁,* _{IN}L*_{i,j-1,k-1}*, and _{IN}L_{*i,j*-*1,k*+*1*}. (one bit of information has been exchanged between the operational cells, located in the circuit having indices *i,j* on the panel having index k, and the operational cells connected with them and implemented in the logical circuits having indices *i*-1*,j,k*-1*, i,j*+1*,k-*1*, i*+1*,j,k-*1*, i,j*-1*,k-*1*, i-*1*,j,k-*1*, i,j*+1*,k-*1*, i*+1*,j,k*+1 and *i,j-1,k*+1)*.*

After the operations described in point 1_3D are performed first, and next the operations of point 2_3D are performed, all logical circuits located on the panel having index k have exchanged simultaneously one bit of information with logical circuits connected with them and located on panels having indices *k*-1 and *k*+1.

3_3D) After the sent information bits are received from the communication lines _{IN}L_{*i*-}*_{1,j,k-1},* _{IN}L_{*i,j*+}*_{1,k-1},* _{IN}L_{*i*+}*_{1,j,k-1},* _{IN}L*_{i,j-1,k-1}*, _{IN}L*_{i,j,k-1}*, _{IN}L_{*i*-*1,j,k*+}*₁,* _{IN}L_{*i,j*+*1,k*+}*₁,* _{IN}L_{*i*+*1,j,k*+}*₁,* _{IN}L_{*i,j-1*,*k*+*1*} and _{IN}L_{*i,j,k*+*1*} the logical circuit activates new logical states on the communication lines _{OU}L_{*i*-*1*,*j*,*k*+}*₁,* _{OU}L_{*i*,*j*+*1*,*k*+*1*}, _{OU}L_{*i*+*1*,*j*,*k*+*1*}, _{Ou}L_{*i,j-1,k*+*1* OU}L_{*i*-}*₁,*_{*j*,*k*-*1*}, _{OU}L_{*i*,*j*+*1*,*k*-}*₁,* _{OU}L_{*i*+}*_{1,j,k-1},* _{OU}L_{*i,j*-*1,k*-*1*}, _{OU}L*_{i,j,k-1},* and _{OU}L_{*i,j,k*+*1*} which are the bits of the following information. They are stored in registers ₁₇R*_{i-1,j,k}*, ₁₆R_{*i-1,j*,*k*}, ₂₇R_{*i,j*+}*_{1,k},* ₂₆R_{*i,j*+*1*,}*ₖ,* ₃₇R_{*i*+1}*_{,j,k},* ₄₇R*_{i,j-1,k},* ₃₆R_{*i*+*1,j,k*}, ₄₆R*_{i,j-1,k},* ₁₃R*_{i,j,k-1},* ₁₃R_{*i,j,k*+*1*} and the procedure for transmission of information between the logical circuits located in a single plane begins anew starting from point 1_3D.

After the actions described successively in points from 1_2D) to 3_2D) and from 1_3D) to 3_3D) are performed, all cells implemented in the logical circuits of the machine will exchange simultaneously one bit of information and are ready for successive exchange of data bits. The exchange is executed in all directions, and therefore the operation described in points 1_2D and 1_3D; 2_2D and 2_3D and 3_2D and 3_3D can be performed in pairs at the same time.

Fig. 17 shows a logical circuit with designated areas of operational cells and transmitting and receiving registers responsible for exchange of information between operational cells belonging to a single panel and the neighboring panels. Symbols _{IN}L and _{OU}L indicate communication lines, symbols K (with indices) indicate directional lines, and symbols _{IN}K and _{OU}K indicate directional channels. Indices *i,j,k* indicate directions of signal transmission in the three-dimensional space.

### Reduction of the number of directional lines

The aforementioned method for data transmission reduces the number of directional channels, however the number of directional lines in a single channel may still be very high. Integrated circuits of a high integration scale may comprise up to a few hundred operational cells (depending on their functionality) in a single silicon structure, i.e. in a single logical circuit.

Such a large number of cells results in that a machine comprising from tens or hundreds of thousands of such circuits, built as described above, would require use of a large number of connectors and connecting wires.

The manufacturing costs of such a device and its subsequent maintenance would be very high (the higher the number of connectors and wires used, the greater the probability of failure).

This problem can be solved by concentrating directional lines and transmission of data by fast serial links, as shown in Fig. 18. Fig. 18 presents a circuit having directional channels and lines, input/output shift registers IN and OU as well as bi-wire input/output lines LIN. Indices *i, j, k* denote directions of signal transmission in a three-dimensional space.

Exchanging a single bit of information between operational cells is effected in two stages.

### Stage 1

First, there are executed operations described in sections 1_2D) and 1_3D. Then, the binary states of directional lines grouped in the directional channels _{OU}K*_{i,j,k}*-*₁,* _{OU}K_{*i,j,k*+*1*}, _{OU}K*_{i-1,j,k}*, _{OU}K*_{i,j+1,k}*, _{OU}K_{*i*+*1,j,k*} and _{OU}K*_{i,j-1,k}* are simultaneously stored, in each logical circuit of the machine, in the five-bit shift registers OU_{*i,j,k*-*1*}, OU_{*i,j,k*+*1*}, OU*_{i-1,j,k}*, OU_{*i,j*+}*_{1,k},* OU_{*i*+*1,j,k*} and OU_{*i*,*j-1,k*}, the outputs of which are connected to single-wire, serial output lines LIN_{*i,j,k*-*1*}, LIN_{*i,j,k*+*1*}, LIN*_{i-1,j,k},* LIN_{*i,j*+*1,k*}, LIN_{*i*+1*,j,k*} and LIN_{*i,j*-*1,k*}.

In the subsequent time steps, the information bits are read from the shift registers, from single-wire serial input lines LIN_{*i,j,k*-*1*}, LIN*_{i,j,k+1}*, LIN*_{i-1,j,k}*, LIN*_{i,j+1,k}*, LIN*_{i+1,j,k}* and LIN*_{i,j-1,k}* into the five-bit shift registers IN*_{i,j,k-1},* IN*_{i,j,k+1}, IN_{i-1,j,k},* IN*_{i,j+1,k}, IN_{i+1,j,k}* and IN*_{i,j-1,k}*. Each of the IN and OU registers comprises five bits of information, since in a single cycle the highest number of data bits exchanged between the logical circuits equals 5 (exchange of data between circuits located on neighboring panels is described in point 1_3D). After transmission of all information bits, there are executed operations described at sections 2_2D) and 3_2D).

### Stage 2

Similarly, as described in Step 1, data is exchanged between the input and output shift registers of the interconnected cells. In the final phase, after sending all the bits of information, there are performed the operations described in points 3_2D) and 3_3D).

The system for transmission of bits, between logical circuits positioned at nodes of a square lattice, on flat, two-dimensional, parallel panels, allows for design of a parallel machine, in which the logical circuits are positioned in an FCC lattice.

The number of bi-wired input/output lines exiting a single circuit is reduced from 18 to 6. This simplifies connections topology in the machine, deceases its manufacturing cost, and significantly decreases a probability of failure of the system. In case of implementation of tens of operational cells in a single logical circuit, it makes the design of the machine comprising thousands of logical circuits relatively simple in implementation. When using dedicated, micro-programmable logical circuits, microprocessors, or FPGA-type logical circuits, it is possible to implement in these circuits various number of operational cells without the need for structural changes of the machine (the number of wires needed to transmit signals does not depend on the number of the implemented operational cells).

### Example embodiment

An example machine comprises 243 operational cells, positioned at nodes of a face centered lattice FCC, implemented in 27 logical circuits (1, 1 - 3, 3) positioned at the nodes of a square lattice, on 3 flat, two-dimensional, parallel panels: P1', P2', P3' (panels P1', P2', P3' are assigned indices 1, 2 and 3) - Fig. 19. It is assumed that panel 1 has in its left, top corner a *supplementary* circuit, wherein the first plane is a *rotated* plane. The horizontally-hatched circuits are supplementary circuits, while the vertically-hatched circuits are basic circuits (Fig. 7A and 7B). Each panel P1', P2', P3' comprises 9 logical circuits, each having 9 operational cells. The cells are positioned on 2 planes (regular and rotated).

This example is limited to analysis of transmission of information bits only in the plane of panel P2', in the directional channels _{IN}K_{1,2,2} and _{OU}K_{1,2,2} (exchange of data between operational cells no. 1, 2 and 6 configured in the circuit U_{2,2,2}, and cells no. 4, 5 and 9 configured in the circuit U_{1,2,2} and cell no. 5 configured in the circuit U_{1,1,2}). The left side of Fig. 20 shows the numbering of directions of receiving data by the cell located in the black node of the FCC lattice (6 directions of connections between the nodes of the lattice: 1:1', 2:2', 3:3', 4:4', 5:5' and 6:6' designated at the right side of the drawing as: 1', 2', 3', 4', 5', and 6'). A fragment of panel with 3 logical circuits comprising a network of operational cells in a basis logical circuit (circuits *U_{1,1,2} and* U*_{2,2,2})* and supplementary logical circuit (circuit U_{*1*,2}*_{,2})* (the drawing on the right side). The lines indicate the connections between the circuits which belong to the directional lines ₁K*_{1,2,2}*, ₂K*_{1,2,2}*, ₃K*_{1,2,2}*, ₄K*_{1,2,2}*, ₅K*_{1,2,2}* and ₁₂K*_{1,2,2}* of circuit U_{2,2,2}. The plane designated by nodes *2',1', 2* and *1* at the left side of the drawing corresponds to the plane comprising operational cells 1, 2, 3, 4 and 5 in the logical circuit U_{2,2,2}. The plane designated by nodes 3', 5', 6' and 4' corresponds to the plane with nodes 6, 7, 8 and 9. The designation of cell numbers and directions of signal transmission and reception from and to directional lines belonging to the directional channels _{IN}K_{1,2,2} and _{OU}K_{1,2,2} is arranged according to the rule: (number of cell of circuit U*_{2,2,2}*)/(direction of transmission and reception of data) as shown at the right side of Fig. 20 (e.g. the direction of connection of the cell located in node 1 with the cell of node 9 is designated as 1/1').

After the sequence of transmitting and receiving information bits in the circuit U_{2,2,2} is determined (e.g. at first, two bits will be sent in direction 1/1' and 1/2', and next one bit will be sent in each of directions 2/2', 1/5', 2/5', 6/1', 6/2' and 6/4') data exchange is performed according to the following scheme:
1) 1) The circuit U_{2,2,2} activates on communication lines _{OU}L_{1,2,2} and _{OU}L_{1,1,2} 2 bits of information, which are transmitted by cell no. 1 of this circuit to cell no. 9 of circuit U_{1,2,2} and to cell no. 5 of circuit U_{1,1,2.} Simultaneously, logical circuit U_{1,1,2} activates on communication line _{OU}L_{2,2,2} a bit of information, which is transmitted by cell no. 9 of circuit U_{1,1,2} to cell no. 1 of circuit U_{2,2,2}.
2) The states of communication lines _{OU}L_{1,2,2} and _{OU}L_{1,1,2} of circuit U_{2,2,2} are entered to registers ₂R_{1,2,2} and ₃R_{1,2,2} and the state of communication line _{OU}L_{2,2,2} of circuit U_{1,1,2} is entered to register R_{1,2,2}
3) After the states of outputs of registers ₂R_{1,2,2} and ₃R_{1,2,2} appear on the directional lines ₂K_{1,2,2} and ₃K_{1,2,2} of circuit U_{2,2,2}, the states of these lines are entered to positions of the first and second output bit of shift register OU_{1,2,2}. A similar situation occurs in circuit U_{1,1,2}, after the state of output of register ₃R_{2,1,2} appears on the directional line ₃K_{2,1,2} the state of this line is entered to position of the second output bit of shift register OU_{2,1,2}.
4) In the following 5 time steps, via 2 single-wire serial input/output lines, information bits are simultaneously send to the logical circuits U_{1,2,2} and U_{2,1,2} (via the shift registers OU_{1,2,2} of circuit U_{2,2,2} and OU_{2,1,2} of circuit U_{1,1,2}) and read from the logical circuits U_{1,2,2} and U_{2,1,2} (via the shift registers IN_{2,2,2} of circuit U_{2,2,2} and IN_{2,1,2} of circuit U_{2,1,2}).
5) The output of the binary position 1 of shift register IN_{2,2,2} in the circuit U_{2,2,2}, via the directional line ₅K_{1,2,2}, is written to registers ₅R_{1,2,2} of circuit U_{2,2,2} and the outputs of the binary positions 1 and 2 of shift register IN_{2,2,2} in the circuit U_{1,2,2}, via the directional lines, ₅K_{1,2,2} and ₁₂K_{1,2,2} are written to registers ₅R_{2,2,2} and ₁R_{1,1,2} of circuit U_{1,2,2}
6) The signals, from registers ₅R_{1,2,2} and ₅R_{2,2,2}, that appeared on the communication lines _{IN}L_{1,2,2} of circuit U_{2,2,2} and _{IN}L_{2,2,2} of circuit U_{1,2,2} are information bits which were exchanged by the operational cells implemented in these circuits (cell no. 1 of circuit U_{2,2,2} and cell no. 9 of circuit U_{1,2,2}).
7) The state of the output of register ₁R_{2,2,2} of circuit U_{2,1,2} is written, via directional line ₁K_{2,2,2} to the position of the third output bit of shift register OU_{2,2,2} and the state of the output of register ₁R_{1,1,2} of circuit U_{1,2,2} is written, via directional line ₁K_{1,1,2} to the position of the third output bit of shift register OU_{1,1,2}
8) In the successive 5 time steps, one bit of information is sent to logical circuit U_{2,2,2} by means of shift register OU_{2,2,2} of circuit U_{2,1,2} and one bit of information is sent to logical circuit U_{1,1,2} by means of shift register OU_{1,1,2} of circuit U_{1,2,2}.
9) The output of the third binary position of shift register IN_{1,2,2} in the circuit U_{1,1,2}, by means of directional line ₄K_{1,2,2}, is written to register ₄R_{1,2,2} (the output of this register is connected with the communication line _{IN}L_{2,2,2}) and simultaneously, the output of the binary position of shift register IN_{2,1,2} in circuit U_{2,2,2}, is stored to register ₄R_{2,1,2} via the directional line ₄K_{2,1,2} (the output of this register is connected with communication line _{IN}L_{1,1,2}).
10) The signals that appeared on the communication lines _{IN}L_{2,2,2} of circuit U_{1,1,2} and _{IN}L_{1,1,2} of circuit U_{2,2,2} are bits of information, which were exchanged by the operational cells implemented in these circuits (cell no. 1 of circuit U_{2,2,2} and cell no. 5 of circuit U_{1,1,2}).
11) In a manner similar to that described in points from 1 to 10, the successive 5 bits are transmitted and received for directions 2/2', 1/5', 2/5', 6/1', 6/2' and 6/4'.The difference is that the signals read from communication lines _{IN}L_{2,2,2} of circuit U_{1,1,2} and _{IN}L_{1,1,2} of circuit U_{2,2,2} do not carry information.

In a similar manner, information is exchanged simultaneously in all spatial directions. The cells which are connected inside the logical circuit exchange information at the same time.

### SECOND EXAMPLE

The second example is also related to the machine shown in Fig. 12.

### Reduction of the number of directional lines and channels

The solution presented below, according to a second example, allows for alternative manner of reduction of the number of directional channels, between respective logical circuits, from 18 to 6. By accumulation of directional channels in specific groups and signal transmission via shift registers to neighboring circuits in two stages, the number of directional lines and channels is reduced.

### A circuit designed for information exchange in a counter-clockwise-edge arrangement using shift registers

The operational cells of the logical circuit (denoted by indices (*i,j,k*)) transmit and receive signals from the nearest neighbors in a plane denoted by index *(k),* by communication lines _{INq}L and _{OUq}L - as shown in Fig. 21. The value of index q = 1 or q = 2 indicates the directions of sending data via the lines _{OUq}L in the plane of the panel. Index q=1 indicates the directions: upwards - (*i*-1,*j*,*k*), rightwards - (*i,j*+1*,k*)*,* downwards - (*i*+1*,j,k*) and leftwards - (*i,j*-1*,k*)*,* and index q=2 indicates the directions: upwards and leftwards - (*i*-1*,j*-1*,k*), rightwards and upwards - (*i*-1*,j*+1*,k*)*,* downwards and rightwards - (*i*+1*,j*+1*,k*) and leftwards and downwards - (*i*+1*,j*-1*,k*)*.* If index (q) has values from 3 to 5, then data are transmitted via communication lines _{OUq}L towards the neighboring panels having indices (*k*-1) and (*k*+1), wherein index q=3 indicates direction downwards - (*i*+1*,j,k*-1 or *i*+1*,j,k*+1), q = 4 indicates direction leftwards (*i,j-*1,*k*-1 or *i,j*-1*,k*+1), q = 5 indicates direction upwards (*i*-1*,j,k*-1 or *i*-1*,j,k*+1)*,* and q = 6 indicates direction rightwards (*i,j*+1*,k*-1 or *i,j*+1*,k*+1)*.* Indices (*i,j,k*) indicate the register in which the logic state of the communication line is written or read.

Fig. 21 presents a section of a logical circuit having operational cells and 6 shift registers R, responsible for the exchange of information between the cells located in the operating system logic belonging to three neighboring panels.

The shift registers comprise one-bit registers, whose binary states can be written or read in parallel at selected moments. Two four-bit shift registers →₁R_{*i,j,k*-}*₁→*₂R*_{i,j,k-1}*→₃R*_{i,j,k-1}*→₄R*_{i,j,k-1}*→ and →₁R_{*i,j,k*+*1*}→₂R_{*i,j,k*+*1*}→₃R_{*i,j,k*+*1*}→₄R_{*i,j,k*+*1*}→ are responsible for data information exchange between the operational cells in the logical circuit located in the plane of the panel (having indices (*i,j,k*)) and cells located in logical circuits (indexed by symbols (*i,j,k*-1), (*i*-1*,j,k*-1), (*i,j*+1*,k*-1), (*i*+1*,j,k*-1), (*i,j*-1*,k*-1), (*i,j,k*+1), (*i*-1*,j,k*+1), (*i,j*+1*,k*+1), (*i*+1*,j,k*+1) *and* (*i,j*-1*,k*+1), belonging to neighboring panels indexed as (*k*-1) and (*k*+1). Four three-bit shift registers comprising registers →₁R_{*i*-*1,j,k*}→₂R_{*i*-*1,j,k*}→₃R_{*i*-*1,j,k*}→*,* →₁R_{*i,j*+*1,k*}→₂R_{*i,j*+*1,k*}→₃R_{*i,j*+*1,k*}→*,* →₁R_{*i*+*1,j,k*}→₂R_{*i*+*,j,k*}→₁R_{*i*+*1,j,k*}→ and →₁R_{*i,j*-*1,k*}→₂R_{*i,j*-*1,k*}→₃R_{*i,j*-*1,k*}→ are used for information exchange between operational cells in the logical circuit having indices (*i,j,k*) and cells located in logical circuits having indices (*i*-1*,j,k*)*,* (*i,j*+1*,k*)*,* (*i*+1*,j,k*) *and* (*i,j*-1*,k*), belonging to the same panel (symbol (→) indicates directions of bit transmission). Indices (*i,j,k*) indicate the logic circuit for which information is sent.

Letter S denotes signal lines designed to rewrite the binary information from the shift register which are responsible for the transmission of information between the panels to the registers responsible for the transmission of information in the plane of the panel. The serial inputs and outputs of all shift registers are connected to the one-wire input/output lines _{INq}LIN/_{OUq}LIN, which also constitute the input/output lines of all six adjacent logic circuits. Indices (*i,j,k*) denote directions of signal transmission in a three-dimensional space.

In the indicated moment, the logical circuit forces all output communication lines _{OUq}L logical states corresponding to bits of information which will be transmitted by the operational cells in all directions of the FCC lattice (excluding directions (*i,j,k-*1) and (*i,j,k*+1)). Exchange of one bit in each direction is effected in stages corresponding to two cycles of serial transmission of bits in the shift registers:

### Stage I

The binary logical states present on the pairs of communication lines (_{OU1}L_{*i*-*1,j,k*} and _{OU2}L*_{i-1,j,k}*); (_{OU1}L*_{i,j+1,k}* and _{OU2}L_{*ij*+*1,k*}); (_{OU1}L_{*i*+*1,j,k*} and _{OU2}L*_{i+1,j,k}*); (_{OU1}L*_{i,j-1,k}* and _{OU1}L*_{i,j-1,k}*); (_{OU3}L*_{i,j,k-1}* and _{OU3}L_{*i,j,k*+*1*})*;* (_{OU4}L*_{i,jk-1}* and _{OU4}L_{*i,j,k*+*1*}); (_{OU5}L*_{i,j,k-1}* and _{OU5}L_{*i,jk*+*1*}) and (_{OU6}L*_{i,jk-1}* and _{OU6}L_{*i,jk*+*1*}) of the logical circuit having indices (*i,j,k*) are stored in the register pairs (₂R*_{i-1,j,k}* and ₃R_{*i-1,j,k*)}; (₂R_{*i,j*+*1,k*} and ₃R_{*i,j*+*1,k*}); (₂R_{*i*+*1,j,k*} and ₂R_{*i*+*1,j,k*}); *(*₂R_{*i,j*-*1,k*} and ₃R_{*í,j-1,k*)}; (₁R_{*i,j,k*-*1*} and ₃R_{*i,j,k*+*1,*}); (₂R_{*i,j,k*-*1*} and ₄R_{*i,j,k*+*1*}); (₃R_{*i,j,k*-*1*} and ₁R_{*i,j,k*+*1*}) and (₄R_{*i,j,k*-*1*} and ₂R_{*i,j,k*+*1*})*.* Next, 4 bits are serially transmitted through all shift registers. The same operation is performed by the other circuits of the machine, in synchrony with the described logical circuit. After data bits are transmitted, the register pairs (₁R*_{i-1,j,k}* and ₃R_{*i*-*1,j,k*}); (₁R*_{i-1,j,k}* and ₃R_{*i-1,j,k*)}; (₁R*_{i-1,j,k}* and ₃R_{*i*-*1,j,k*}) and (₁R*_{i-1,j,k}* and ₃R_{*i*-*1,j,k*}) will contain bits originating from their nearest neighbors in the plane of the panel. Next, the logical circuit reads the contents of these registers via communication lines _{INq}L. The state of these lines forms a set of bits, which reached the operational cells from the directions: ((*i-*1*,j-*1*,k*) *-* line _{IN2}L*_{i-1,j,k}* and (*i,j*-1*,k*) - line _{IN1}L*_{i-1,j,k}*); *((i-*1 *j*+1*,k*) *-* line _{IN2}L_{*i,j*+*1,k*} and (*i*-1*,j,k*) *-* line _{IN1}L_{*i,j*+*1,k*} ); ((*i*+1,*j*+1*,k) -* line _{IN2}L_{*i*+*1,j,k*} and *i*+1*,j,k) -* line _{IN1}L_{*i*+*1,j,k*}) and ((*i*+1*,j-*1*,k*) *-* line _{IN2}L*_{i,j-1,k}* and (*i*+1*,j,k*) *-* line _{IN1}L*_{i,j-1,k}*)*.* At the same time, on the signaling lines S there appeared logical states of the outputs of registers ₁R*_{i,j,k-1},* ₂R*_{i,j,k-1},* ₃R_{*i,j,k-1*, 4}R*_{i,j,k-1},* ₁R*_{i,j,k+1},* ₂R_{*i,j,k*+*1*}, ₃R*_{i,j,k+1}* and ₄R*_{i,j,k+1},* which correspond to bits of information coming from the neighboring logical circuits located on panels having indices (*k*-1) and (*k*+1)*.*

### Stage II

The logical circuit having indices (*i,j,k*) forces the output communication lines ₒᵤ₄L_{*i,j,k*-1} and ₒᵤ₆L_{*i,j,k-*1} logical states corresponding to information bits which will be sent by the operational cells in directions (*i,j,k*-1) and (*i,j,k*+1)*.* The binary logical states on the pairs of signal lines (S*_{i-1,j,k+1}* and S*_{i-1,j,k-1}*); (S_{*i,j*+*1,k*+*1*} and S_{*i,j*+*1,k-1*}); (S_{*i*+*1,j,k*+*1*} and S*_{i+1,j,k-1})* and (S*_{i,j-1,k+1}* and S_{*i,j-1,k*+}*₁)* of the discussed logical circuit are stored in register pairs (₂R*_{i-1,j,k}* and ₃R_{*i-1,j,k*)}; (₂R_{*ij*+1,k} and ₃R_{*i,j*+*1,k*}); (₂R_{*i*+*1,j,k*} and ₃R_{*i*+*1,j,k*}) and (₂R*_{i,j-1,k}* and ₃R*_{i,j-1,k}*) (bits of data originating from the operational cells of the logical circuits of the neighboring panels having indices (*i,j,k*-1) and (*i,j,k*+1*)* addressed to cells of circuits (*i-*1,*j,k*)*,* (*i,j*+1*,k*)*,* (*i*+1,*j,k*) *and (i,j-1,k)).* Next, the logical circuit writes to registers ₄R_{*i,j,k*-*1*} and ₄R_{*i,j,k*+1} the states of communication lines ₒᵤ₆L_{*i,j,k*-1} and ₒᵤ₄L*_{i,j,k}*-₁. Next, 2 bits of information are serially transmitted through all shift registers. After transmission is finished, the pairs of registers (₁R_{*i*-*1,j,k*} and ₂R_{*i*-*1,j,k*}); (₁R_{*i,j*+*1,k*} and ₂R_{*i,j*+*1,k*}); (R_{*i*+*1,j,k*} and ₂R_{*i*+*1,j,k*}); (₁R_{*i,j*-*1,k*} and ₂R*_{i,j-1,k}*) and (₂R*_{i,j,k-1}* and ₂R_{*i,j,k*+*1*}) comprise bits originating from the nearest neighbors located on the panels having indices (*i,j,k*)*.* Next, the logical circuit reads the contents of these registers via communication lines _{INq}L. The state of these lines is a set of bits, which reached the operational cells from directions: ((*i,j-*1,*k*+1 - line _{IN2}L*_{i-1,j,k}* and (*i,j*-1*,k*-1 *-* line _{IN3}L_{*i*-*1,j,k*}); ((*i*-1,*j,k*+1) - line _{IN2}L_{*i,j*+*1,k*} and (*i*-1*,j,k*-1) - line _{IN3}L_{*i,j*+*1,k*}); ((*i,j*+1*,k*+1) *-* line _{IN2}L_{*i*+*1*,*j,k*} and (*i,j*+1*,k*-1) *-* line _{IN3}L_{*i*+}*₁,ⱼ,ₖ*); ((*i*+1*,j,k*+1) *-* line _{IN2}L_{*i,j*-*1,k*} and (*i*+1*,j,k*-1) *-* line _{IN3}L_{*i*+*1,j,k*}) and ((*i,j,k*-1) *-* line _{IN7}L_{*i,j,k*-*1*} and (*i,j,k*+1) *-* line _{IN7}L_{*i,j,k*+*1*}).

After execution of the operations described in steps I and II, operational cells implemented in the logical circuits located in the machine will exchange one bit of information in all directions simultaneously.

The system for transmission of bits, between logical circuits positioned at nodes of a square lattice, on flat, two-dimensional, parallel panels, allows for design of a parallel machine, in which the logical circuits are positioned in an FCC lattice.

The number of bi-wired input/output lines exiting a single circuit is reduced from 18 to 6. This simplifies connections topology in the machine, deceases its manufacturing cost, and significantly decreases a probability of failure of the system. In case of implementation of tens of operational cells in a single logical circuit, it makes the design of the machine comprising thousands of logical circuits simple in implementation.

When using dedicated, micro-programmable logical circuits, microprocessors, or FPGA-type logical circuits, it is possible to implement in these circuits various number of operational cells without the need for structural changes of the machine (the number of wires needed to transmit signals does not depend on the number of the implemented operational cells).

### Example embodiment

The present example embodiment relates to a machine as shown in Fig. 19.

This example is limited to analysis of transmission of information bits in the plane of panel P2' in the directions: vertical and left-inclined, wherein the data are exchanged between circuits U_{2,2,2} and U_{1,1,2} and U_{2,2,2} and U_{1,2,2} as well as between panels P1' and P2' arranged in parallel in the direction ahead and ahead and upwards, ahead and rightwards, ahead and downwards and ahead and leftwards, wherein the data are exchanged between circuits U_{2,2,2} and U_{2,2,1}, U_{2,2,2} and U_{1,2,1}, U_{2,2,2} and U_{2,3,1}, U_{2,2,2} and U_{3,2,1}, and U_{2,2,2} and U_{2,1,1}. Exchange of data in the plane of panel P'2 will be carried out between operational cells located in the nodes of the lattice 1, 2 and 6 (cells no. 1, 2 and 6) configured in circuit U_{2,2,2}, and cells no. 4, 5 and 9 configured in circuit U_{1,2,2} and cell no. 5 configured in circuit U_{1,1,2}. Exchange of data between neighboring panels in the example will be carried out between operational cells no. 1, 2, 3, 4 and 5 configured in circuit U_{2,2,2}, and cells no. 4 and 5, 1 and 4, 1 and 2, and 2 and 5 configured in circuits U_{1,2,1}, U_{2,3,1}, U_{3,2,1} and U_{2,1,1} that belong to panel P'1 (Fig. 22).

On the left side of Fig. 22 there is shown the numbering of direction of transmission and reception of data to and from a cell located in the black node of the FCC lattice (six directions are designated by the straight sections which start and end at the nodes: 1:1', 2:2', 3:3', 4:4', 5:5' and 6:6', they are designated at the right side of the drawing as 1', 2', 3', 4', 5', and 6'). The right side of fig. 22 shows a fragment of panels P'1 and P'2 with 3 logic circuits comprising a lattice of operational nodes in a basic configuration (circuits U*_{1,1,2}*, U*_{2,2,2}* and U*_{2,2,1}*) and 5 logical circuits comprising a lattice of operational nodes in a supplementary configuration (circuits U*_{1,2,2}*, U*_{1,2,1}*, U*_{2,3,1},* U*_{3,2,1}* and U*_{2,1,1}*). The plane designated by nodes *2',1', 2* and *1* at the left side of the drawing corresponds to planes comprising operational cells no. 1, 2, 3, 4 and 5, and the plane designated by nodes 3', *5', 6'* and *4'* corresponds to the planes with operating cells no. 6, 7, 8 and 9. The correspondence between the numbers of cells and directions of transmission and reception of signals (solid lines on fig. 22) is arranged according to the rule: (number of cell of circuit U*_{2,2,2}*)/(direction of transmission and reception of data) as shown at the right side of Fig. 22 (e.g. the direction of connection of cell no. 1 of circuit U_{2,2,2} with cell no. 9 of circuit U*_{1,2,2}* is designated by symbols 1/1').

After the sequence of transmission and reception of data bits in the circuit U_{2,2,2} is determined (e.g. first, in the first cycle, in the plane of the panel P'2 there will be sent two bits in direction 1/1' and 1/2', next there will be sent one bit sequentially in directions: 2/2', 1/5', 2/5', 6/1', 6/2' and 6/4', and between the panels P'2 and P'1 there will be sent a group of 5 bits in directions 3/4', 1/4', 2/3', 5/5' and 4/6', next a group 3/3', 2/4', 5/3', 4/5' and 1/6', and next, sequentially, one bit in each of directions 3/5' and 3/6') the data exchange is carried out as follows:

### Stage I

1) Circuit **U**_{2,2,2} activates on the communication lines _{OU1}**L**_{1,2,2} and _{OU2}**L**_{1,2,2} 2 bits of information, which are sent by cell no. 1 of this circuit to cell no. 9 of circuit U_{1,2,2} and cell no. 5 of circuit U_{1,1,2}. Moreover, it activates on communication lines _{OU3}L_{2,2,1}, _{OU4}L_{2,2,1}, _{OU5}L_{2,2,1} and _{OU6}L_{2,2,1} 4 bits of information, which are transmitted by cells no. 1, 2, 5 and 4 of circuit U_{2,2,2} to cell no. 4 of circuit U_{1,2,1}, cell no. 1 of circuit U_{2,3,1}, cell no. 2 of circuit U_{3,2,1} and cell no. 5 of circuit U_{2,1,1}. At the same time, circuits: U_{1,1,2}, U_{1,2,2}, U_{1,2,1}, U_{2,3,1}, U_{3,2,1} and U_{2,1,1}.activate on the communication lines _{OU2}L_{2,1,2}, _{OU2}L_{2,2,2}, _{OU3}L_{1,2,2}, _{OU4}L_{2,3,2}, _{OU5}L_{3,2,2} and _{OU6}L_{2,1,2}, information bits, which are transmitted by their cells no. 5, 9, 4, 1, 2 and 5 to cells no. 1, 2, 5 and 4 of circuit U_{2,2,2}.
2) Circuit U_{2,2,2}writes the logical states of the earlier-activated communication lines _{OU2}L_{1,2,2}, _{OU1}L_{1,2,2}, _{OU3}L_{2,2,1}, _{OU4}L_{2,2,1}, _{OU5}L_{2,2,1} and _{OU6}L_{2,2,1} to shift registers ₃R*_{1,2,2}*, ₂R*_{1,2,2}*, ₁R*_{2,2,1}*, ₂R_{*2,2,1,* 3}R*_{2,2,1}* and ₄R*_{2,2,1}*, and circuits U_{1,1,2}, U_{1,2,2}, U_{1,2,1}, U_{2,3,1}, U_{3,2,1} and U_{2,1,1} write logical states of their communication lines ouL to shift registers R as follows: _{OU2}L₂,_{1,2}→₃R*₂,₁,₂*, _{OU1}L-_{2,2,2}→₂R_{2,2,2, OU3}L_{1,2,2}→₃R*₁,₂,₂*, _{OU4}L_{2,3,2}→₄R_{*2,3,2*, OU5}L_{3,2,2}→₁R*_{3,2,2}* and _{OU6}L_{2,1,2}→₂R_{*2,1,2*,}
3) In the following 4 consecutive time steps, via the shift register →₁R*_{1,2,2}*→₂R*_{1,2,2}*→₃R*_{1,2,2}*→ of circuit U_{2,2,2}, having its serial output connected with the output line _{OU}LIN_{1,2,2} and, subsequently, the input line _{IN}LIN_{2,2,2} of the shift registers →₁R*_{1,1,2}*→₂R*_{1,1,2}*→₃R*_{1,1,2}*→ of circuit U_{1,2,2}, the output line _{OU}LIN_{1,1,2} from these registers, the input line _{IN}LIN_{1,2,2} of circuit U_{1,1,2} and shift registers →₁R*_{2,1,2}*→₂R*_{2,1,2}*→₃R*_{2,1,2}*→ of this circuit, bits are transmitted from circuit U_{2,2,2} to circuits U_{1,2,2} and U_{1,1,2}. At the same time, via the shift register →₁R*_{2,2,1}*→₂R*_{2,2,1}*→₃R*_{2,2,1}*→₄R*_{2,2,1}*→ of circuit U_{2,2,2}, having a serial output connected with an output line _{OU}LIN_{2,2,1}, from which there is connected the input line _{IN}LIN_{2,2,2} of shift registers →₁R*_{2,2,2}*→₂R*_{2,2,2}*→₃R*_{2,2,2}*→₄R*_{2,2,2}*→ of circuit U_{2,2,1}, 4 bits are transmitted from circuit U_{2,2,2} located in panel P'1 to circuit U_{2,2,1} on panel P'2. At the same time, circuits U_{1,1,2} and U_{1,2,2} located on panel P'2 and circuits U_{1,2,1}, U_{2,3,1}, U_{3,2,1} and U_{2,1,1} located on panel P'1 send information bits to circuits U_{1,2,2} and U_{2,2,2} and U_{1,2,2}, U_{1,3,2}, U_{3,2,2} and U_{2,1,2} located on panel P'2, in the same manner as circuit U_{2,2,2}, sends, via its output lines OULIN_{2,1,2} and OULIN_{2,2,2} and _{OU}LIN_{1,2,2}, _{OU}LIN_{2,3,2}, _{OU}LIN_{3,2,2} and _{OU}LIN_{2,1,2} information bits to circuits U_{1,2,2} and U_{2,2,2} and U_{1,2,2}, U_{2,3,2}, U_{3,2,2} and U_{2,1,2} located on panel P'2.
4) The operational cell in node no. 1 of circuit U_{2,2,2} receives the logical state from the communication line _{IN2}L_{1,2,2}, which is the output of register ₁R*_{1,2,2}*. This register comprises the bit of information (sent via the shift registers of circuit U_{2,1,2}) coming from cell no. 5 of circuit U_{1,1,2} (a similar operation is performed by cell no. 5 of circuit U_{1,1,2} and receives a bit of information coming from cell located in node no. 1 of circuit U_{2,2,2}). Next, the same cell no. 1 of circuit U_{2,2,2} receives the logical state of the communication line _{IN1}L_{2,3,2} which is the output of register ₃R*_{2,3,2}*, which contains the bit of information coming from the cell located in node no. 9 of circuit U_{1,2,2} (a similar operation is performed by the cell located in node no. 9 of circuit U_{1,2,2} and collects a bit of information coming from the cell located in node no. 1 of circuit U_{2,2,2}). Therefore, bits of information have been exchanged between the neighboring circuits located in the plane of panel P'2.
5) The parallel outputs of registers forming the shift register →₁R*_{2,2,1}*→₂R*_{2,2,1}*→₃R*_{2,2,1}*→₄R*_{2,2,1}*→ in the circuit U_{2,2,2} are stored by means of signal lines S*_{1,2,1}*, S*_{2,3,1}*, S*_{3,2,1}* and S*_{2,1,1}* to registers ₃R*_{1,2,2}*, ₃R*_{2,3,2}*, ₃R*_{3,2,2}*, ₃R*_{2,1,2}*, and by means of communication line _{OU4}L_{2,2,1} to register ₂R*_{2,2,1}* there is stored the binary information directed from operational cell no. 3 of circuit U_{2,2,2} located on panel P'1 to cell no. 6 of circuit U_{2,2,1} located on the neighboring panel P'1 (the same operations are performed simultaneously by all logical circuits forming the whole machine).

### Stage II

6) In successive 2 time steps, via the shift registers →₁R*_{1,2,2}*→₂R*_{1,2,2}*→₃R*_{1,2,2}*→ and →₁R*_{2,2,1}*→₂R*_{2,2,1}*→₃R*_{2,2,1}*→₄R*_{2,2,1}*→ of circuit U_{2,2,2}, data is transmitted and received to and from the neighbors. All other logical circuits perform simultaneously the same operations and after they are finished, the registers ₂R*_{1,2,2}*, ₂R*_{2,3,2}*, ₂R*_{3,2,2}*, ₂R*_{2,1,2}*, and ₂R*_{2,2,1}* of circuit U_{2,2,2} comprise information bits coming from operational cells: cell no. 5 of circuit U_{2,1,1}, cell no. 4 of circuit U_{1,2,1}, cell no. 1 of circuit U_{2,3,1}, cell no. 2 of circuit U_{3,2,1}, and cell no. 6 of circuit U_{2,2,1}. The operational cells no. 1, 2, 5, 4 and 3 of circuit U_{2,2,2}, to which these data were addressed, read it by communication lines _{IN3}L*_{1,2,2}*, _{IN3}L*_{2,3,2}*, _{IN3}L*_{3,2,2}*, _{IN3}L*_{2,1,2}* and _{IN7}L*_{2,2,1}*. Bits have been exchanged between neighboring circuits located on neighboring panels P'1 and P'2.

Similarly as shown in points from 1 to 6, data is exchanged simultaneously in all other spatial directions. The cells that have direct connections inside the logical circuits exchange information at the same time.

After the operations described in points from 1 to 6 are performed, the logical circuits start sending data from the beginning, starting from point 1 by activating the lines _{OU}L, such that their logical states correspond to the next group of data bits to be exchanged (in the case under consideration, the circuit U_{2,2,2} will exchange information with its neighbors in directions 3/3', 2/4', 5/3', 4/5' and 1/6').

## Claims

1. A parallel machine comprising operational cells forming nodes of a face centered (FCC) lattice, **characterized in that** it comprises:
- a series of panels (P1'-P3') with electronic logical circuits (1,1- 3,3);
- wherein each logical circuit is configured to emulate a plurality of operational cells (OC) and the logical circuits (1,1 - 3,3) are physically connected with each other by input/output lines (_{IN}LIN/_{OU}LIN) such that they form nodes of a square lattice;
- wherein the FCC lattice comprises circuits arranged such that each circuit having index (*i,j,k*) is communicatively connected with 18 neighboring circuits, wherein indices (*i,j*) indicate location of a circuit on a panel and (k) indicates a panel;
- wherein the circuit having index (*i,j,k*) is connected directly only with circuits having indices (*i*-1,*j*,*k*); (*i,j*+1*,k)*; (*i*+1*,j,k*); (*i,j*-1*,k*); (*i,j,k*-1) and (*i,j,k*+1) (directly-connected circuits);
- and wherein the circuit having index (*i,j,k*) is configured to communicate with circuits having indices (*i-*1,*j*-1*,k*), (*i*-1*,j*+1,*k*)*,* (*i*+1*,j*+1*,k*); (*i*+1*,j*-1*,k*)*;* (*i*-1*,j,k*-1); (*i,j*+1*,k*-1); (*i*+1*j,k*-1); (*ij*-1*,k*-1); (*i*-1*,j,k*+1); (*i,j*+1*,k*+*1*); (*i*+1*,j,k*+1) and (*i,j*-1*,k*+1) (indirectly-connected circuits) via the directly-connected circuits.

2. The parallel machine according to claim 1, **characterized in that** the data to indirectly-connected circuits is transmitted in two stages, wherein in the first stage data is sent to the directly connected circuits and in the second stage data is sent to the further directly connected circuits.

3. The parallel machine according to claim 1, **characterized in that**
- each logical circuit (1, 1 - 3, 3) comprises shift registers (→₁R→₂R→₃R→) and (→₁R→₂R→₃R→₄R→);
- wherein the input and output lines (_{IN}LIN and _{OU}LIN) are connected to serial outputs and inputs of output shift registers (→₁R→₂R→₃R→) and (→₁R→₂R→₃R→₄R→);
- wherein parallel inputs of a first group of shift registers (→₁R→₂R→₃R→) is connected with output communication lines (_{OU}L) and with signal lines (S) and parallel inputs of a second group of shift registers (→₁R→₂R→₃R→₄R→) is connected with output communication lines (_{OU}L);
- wherein parallel outputs of the first group of shift registers (→₁R→₂R→₃R→) is connected with input communication lines (_{IN}L) and parallel outputs of the second group of shift registers (→₁R→₂R→₃R→₄R→) is connected with signal lines (S) and input communication lines (_{IN}L);
- wherein the serial outputs of the first group of shift registers (→₁R→₂R→₃R→) is connected, in succession, by output lines (_{OU}LIN), input lines (_{IN}LIN) and input shift registers (→₁R→₂R→₃R→) belonging to logical circuits (1, 1 - 3, 3) being adjacent nodes in the plane of panel of the square lattice, whereas the serial outputs of the second group of shift registers (→₁R→₂R→₃R→₄R→) is connected, in succession, by output lines (_{OU}LIN), input lines (_{IN}LIN) and input shift registers (→₁R→₂R→₃R→₄R→) belonging to logical circuits (1, 1 - 3, 3) being adjacent nodes in the plane of neighboring panels.

4. The parallel machine according to claim 1, **characterized in that**
- the output lines (LIN) are connected to serial outputs of output shift registers (OU) and input lines (LIN) are connected to serial inputs of input shift registers (IN);
- whereas parallel inputs of the output shift registers (OU) are connected with directional channels (_{OU}K) and parallel outputs of the input shift registers (IN) are connected with directional channels (_{IN}K);
- wherein the directional channels (_{OU}K) and (_{IN}K) comprise directional lines (₁K, ₂K, ₃K, ₄K, ₅K, ₁₀K, ₁₁K, ₁₂K, ₁₃K, ₁₄K, ₁₆K, ₁₇K, ₁₈K, ₁₉K, ₂₆K, ₂₇K, ₂₈K, ₂₉K, ₃₆K, ₃₇K, ₃₈K, ₃₉K, ₄₆K, ₄₇K, ₄₈K, ₄₉K);
- and each logical circuit (1, 1 - 3, 3) comprises latch registers (₁R, ₂R, ₃R, ₄R, ₅R, ₁₀R, ₁₁R, ₁₃R, ₁₄R, ₁₆R, ₁₇R, ₁₈R, ₁₉R, ₂₆R, ₂₇R, ₂₈R, ₂₉R, ₃₆R, ₃₇R, ₃₈R, ₃₉R, ₄₆R, ₄₇R, ₄₈R, ₄₉R) connected with directional channels (_{IN}K, _{OU}K);
- wherein a first group of latch registers (₁R, ₁₈R, ₁₉R, ₂₈R, ₂₉R, ₃₈R, ₃₉R, ₄₈R, ₄₉R) is connected directly with the input and output directional channels (_{IN}K and ouK), the inputs of a second group of latch registers (₂R, ₃R, ₁₃R, ₁₆R, ₁₇R, ₂₆R, ₂₇R, ₃₆R, ₃₇R, ₄₆R, ₄₇R) are connected with the communication lines (_{OU}L) and outputs of the third group of latch registers (₄R, ₅R, ₁₀R, ₁₁R, ₁₄R) are connected with communication lines (_{IN}L), wherein the outputs of the first group of latch registers (₁R, ₁₈R, ₁₉R, ₂₈R, ₂₉R, ₃₈R, ₃₉R, ₄₈R, ₄₉R) and the second group of latch registers (₂R, ₃R, ₁₃R, ₁₆R, ₁₇R, ₂₆R, ₂₇R, ₃₆R, ₃₇R, ₄₆R, ₄₇R) are connected sequentially by means of: directional channels (_{OU}K), input shift registers (OU), input/output lines (LIN), input shift registers (IN) and directional channels (_{IN}K) with the inputs of the first group of latch registers (₁R, ₁₈R, ₁₉R, ₂₈R, ₂₉R, ₃₈R, ₃₉R, ₄₈R, ₄₉R) and the third group of latch registers (₄R, ₅R, ₁₀R, ₁₁R, ₁₄R) belonging to logical circuits (1,1-3,3) forming neighboring nodes of the square lattice.

5. The parallel machine according to claim 1, **characterized in that** the panels (P1'-P3') have their main planes positioned vertically.

6. The parallel machine according to claim 1, **characterized in that** the electronic logical circuits (1, 1 - 3, 3) are microprocessors.

7. The parallel machine according to claim 1, **characterized in that** the electronic logical circuits (1, 1 - 3, 3) are PLD circuits, preferably FPGAs.

8. The parallel machine according to claim 1, **characterized in that** the electronic logical circuits (1, 1 - 3, 3) are ASICs.
